(19) **Europäisches Patentamt**
**European Patent Office**
**Office européen des brevets**

(11) **EP 4 136 003 B1**

(12) **EUROPEAN PATENT SPECIFICATION**

(45) Date of publication and mention
of the grant of the patent:
**10.01.2024 Bulletin 2024/02**

(21) Application number: **21710970.1**

(22) Date of filing: **12.03.2021**

(51) International Patent Classification (IPC):
***B60W 30/09*** (2012.01)        ***B60W 30/095*** (2012.01)
***B60W 30/16*** (2020.01)

(52) Cooperative Patent Classification (CPC):
**B60W 30/16; B60W 30/09; B60W 30/095;**
B60W 2520/10; B60W 2520/105; B60W 2554/4042;
B60W 2554/802; B60W 2720/106

(86) International application number:
**PCT/EP2021/056304**

(87) International publication number:
**WO 2021/209202 (21.10.2021 Gazette 2021/42)**

(54) **CUT-IN-SAFE ADAPTIVE CRUISE CONTROL SYSTEM FOR VEHICLES**

EINSCHERSICHERES ADAPTIVES GESCHWINDIGKEITSREGELSYSTEM FÜR FAHRZEUGE

SYSTÈME DE RÉGULATION ADAPTATIVE DE LA VITESSE POUR VÉHICULES LORS DE QUEUES DE POISSON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.04.2020 EP 20169720
16.04.2020 EP 20169992
30.04.2020 EP 20172447**

(43) Date of publication of application:
**22.02.2023 Bulletin 2023/08**

(73) Proprietor: **Technische Universität München
80333 München (DE)**

(72) Inventors:
• **ALTHOFF, Matthias
  80805 München (DE)**
• **MAIERHOFER, Sebastian
  94339 Leiblfing (DE)**
• **PEK, Christian
  85716 Unterschleißheim (DE)**

(74) Representative: **Lucke, Andreas
  Boehmert & Boehmert
  Anwaltspartnerschaft mbB
  Pettenkoferstrasse 22
  80336 München (DE)**

(56) References cited:
**EP-A2- 3 121 076        WO-A1-2004/005092
US-A1- 2009 299 593**

**Description**

FIELD OF THE INVENTION

The present invention is in the field of vehicle control systems. In particular, the invention relates to an adaptive cruise control system for a vehicle, to a vehicle equipped with such adaptive cruise control system and to a method of controlling the trajectory of a vehicle.

BACKGROUND OF THE INVENTION

Adaptive cruise control is a broadly used technology in vehicles of all kind. Following preceding vehicles is one of the most frequently-performed tasks in road traffic. To relieve drivers from this often-perceived tedious task, many vehicles are equipped with adaptive cruise control (ACC) systems, which adapt the dynamics of the vehicle to that of preceding vehicles. Despite the large market penetration of this technology, current ACC systems are still not safe in all driving conditions and require supervision by a human driver, in particular in complex situations involving traffic interactions with other vehicles in a proximity of the vehicle in which the ACC system is installed, such as manually driven vehicles having non-predictably trajectories subject to real-time decisions by their human drivers. For example, 14.6% of traffic accidents registered in Germany in 2007 were rear-end collisions.

Safety is and must remain the highest priority when it comes to the configuration of ACC systems. However, once safety can be guaranteed, driving comfort may be a crucial aspect of the commercial viability of safe ACC systems. In terms of comfort, acceleration and acceleration variations, i.e. jerk (the first derivative of acceleration) play a relevant role, inasmuch as acceleration and jerk are perceived by the human sensory system as forces acting upon the human body that tend to be compensated by corresponding muscular activation and which, in the most extreme cases, can induce body injuries. Most known ACC systems, however, only focus in safety when managing safety-risking situations, at the expense of comfort. As a consequence, comfort might be unnecessarily neglected.

Therefore, there is room for technical improvement for current ACC systems.

WO 2004/005092 A1 discloses a driver assisting system for assisting a driver of a vehicle in danger and emergency brake situations, wherein a decision on whether an assisted braking operation should be initiated is made based on different driving parameters, such as driving speed, state of a gas pedal, state of a brake pedal and relative distance and speed with respect to one preceding vehicle.

EP 3 121 076 A2 and US 2009/0299593 A1 describe vehicle control devices configured for controlling a vehicle so as to avoid a collision with an object either by braking the vehicle or, if braking is per se insufficient for avoiding a collision, by combining braking with steering control.

SUMMARY OF THE INVENTION

The present invention addresses the aforementioned disadvantages of the prior art and aims at providing an ACC system that can react to a broader range of safety-risking situations without requiring the intervention of a human driver and without compromising comfort more than necessary. The invention refers to an adaptive cruise control (ACC) system for a vehicle according to claim 1, to a vehicle according to claim 9 and to a method of controlling a trajectory of a vehicle according to claim 10. Preferred embodiments of the invention are defined in the appended dependent claims.

The ACC system of the invention comprises a detection module and a safety module. The detection module is configured for detecting one or more preceding vehicles driving ahead of the vehicle and for determining a respective velocity and a respective distance of each of the detected preceding vehicles with respect to the vehicle.

The term "vehicle", when used herein without further indication, shall refer to the vehicle in which the ACC system is installed. "Preceding vehicle" may refer instead to a vehicle other than "the vehicle", wherein the preceding vehicle, in particular a rearmost end thereof, such as a rear bumper, precedes the vehicle, in particular a foremost end thereof, such as a front bumper, in the direction of movement of the vehicle. The determined distance may hence correspond to the distance between the parts of the vehicle and the corresponding preceding vehicle that would first come into contact with each other in case of a front-end/rear-end collision between the vehicle and the preceding vehicle. The determined distance may for instance correspond, in each case, to a distance between the front bumper of the vehicle and the rear bumper of the corresponding preceding vehicle.

A preceding vehicle may be aligned with the vehicle in the direction of movement of the vehicle at least within an offset limit. The offset limit may be chosen such that a preceding vehicle needs not be precisely aligned with the vehicle for being regarded as such. For example, if the vehicle is driving on a road with lane markings, any vehicle driving ahead of the vehicle and being, at least in part, within the same lane as the vehicle in which the ACC system is installed, may be regarded to be a preceding vehicle. A velocity of the preceding vehicle may hence be aligned with a velocity of the vehicle. However, the velocity of the preceding vehicle may have a component aligned with the velocity of the vehicle and a component that is not aligned with the velocity of the vehicle, for example when the preceding vehicle is changing lanes. Further, the velocity of the preceding vehicle may be zero. Thus, the fact that the preceding vehicles are defined as vehicles "driving" ahead of the vehicle does not necessarily imply that they must have a non-zero velocity. A preceding vehicle may be a moving preceding vehicle having a non-zero velocity, which may or not coincide in direction with the velocity of the vehicle, or a standing preceding vehicle having a zero-velocity. Further, any vehicle exiting the lane on which the vehicle is driving ahead of the vehicle may continue to be regarded as a preceding vehicle for a predefined time lag.

The velocity and/or distance of the preceding vehicles may be obtained by direct measurement using one or more on-board measurement devices connected to and/or comprised in the detection module, for example radar devices, camera devices, or laser sensor devices, configured for measuring the respective velocities and/or distances of the preceding vehicles with respect to the vehicle. Additionally or alternatively, the detection module can be configured for obtaining the respective velocities and/or distances of the preceding vehicles via an exchange of information between the vehicle and the respective preceding vehicles using inter-vehicle communication systems.

The detection module is further configured for determining whether each of the determined distances is smaller than a respective safety distance. Thus, each of the distances determined for a corresponding preceding vehicle is compared to a respective safety distance. The safety distances may be predefined distances, for example predefined distances stored in a table of values stored in a memory device connected to or comprised in the detection module.

The safety distances may however also correspond, in each case, to a computed distance between the vehicle and the corresponding preceding vehicle over which the vehicle can stop, preferably from a state of maximum acceleration of the vehicle (i.e. from a state in which the acceleration of the vehicle is the maximum possible acceleration the vehicle can achieve), without a collision with the corresponding preceding vehicle in case of a full braking of the corresponding preceding vehicle, i.e. in case the corresponding preceding vehicle decelerates with a minimal acceleration that is possible or is assumed for the corresponding preceding vehicle. Such safety distance can be computed or estimated by the detection module, for example by a processing unit included in or connected to the detection module, based on the corresponding velocity determined for the corresponding preceding vehicle and based on the minimal acceleration (i.e. the maximal amplitude of a negative braking deceleration) that is assumed or is possible for the preceding vehicle. A predefined minimal possible acceleration may be assumed for all preceding vehicles. For the vehicle, a braking deceleration according to a predefined braking acceleration modification scheme may be assumed. The predefined braking acceleration modification scheme may be customisable.

"Acceleration modification scheme" may refer herein to a target modification of the acceleration of the vehicle, in particular over a predefined time interval, according to an arbitrary time-dependent acceleration function that respects one or more predefined boundary conditions. Thus, if the acceleration of the vehicle is modified according to a given acceleration modification scheme, the acceleration of the vehicle may timely evolve in an arbitrary manner as long as the corresponding boundary conditions are respected. The aforesaid "predefined time interval" may correspond to a regular time interval over which the ACC system iteratively operates or to a multiple thereof.

The customisable predefined braking acceleration modification scheme may define a predefined braking acceleration profile and/or a predefined braking jerk profile configured for optimising the comfort sensation of occupants of the vehicle, for example by not exceeding predefined acceleration and/or jerk lower and upper limits.

An "acceleration profile" and a "jerk profile" may refer herein to a time evolution of an acceleration and a jerk of the vehicle, respectively, according to a correspondingly defined time-dependent function $a(t)$ or $j(t) = a'(t)$, wherein "x'" denotes the time derivative of x, i.e. wherein $j(t)$ is the time derivative of the acceleration of the vehicle.

The customisable predefined braking acceleration modification scheme may be stored in a storage device comprised in or connected to the ACC system. For example, if the predefined braking acceleration modification scheme is based on a predefined braking jerk profile, a time function specifying the time evolution of the jerk of the vehicle according to the braking jerk profile may be stored in such storage device.

The acceleration of the vehicle may be bounded by a value for the minimal acceleration (i.e. the maximal amplitude of a negative braking deceleration) that can be achieved by the vehicle, which can be pre-stored in the detection module. The value for the minimal acceleration of the vehicle may account for dynamic properties of the vehicle that are relevant for deceleration, such as braking power, aerodynamics and/or road-tyre friction. The value for the minimal acceleration that can be achieved by the preceding vehicle can be a predetermined value, a value obtained from the preceding vehicle via inter-vehicle communication or a combination of both. For example, the detection module may be configured for determining, based on visual imaging recognition, a manufacturer and model type or a plate registration number of the preceding vehicle and for obtaining the value for the minimal acceleration that can be achieved by the preceding vehicle from a table of values storing minimal accelerations achievable by different vehicle models of different manufacturers or registered vehicles, accordingly. In some embodiments, the same predefined minimal acceleration may be assumed for any preceding vehicle.

In a situation in which a distance between the vehicle and a corresponding preceding vehicle equals or exceeds the respective safety distance, it is always possible for the vehicle to react to a variation in the trajectory of the preceding vehicle, in particular according to the predefined braking jerk profile, in time to avoid a collision, even if the preceding vehicle suddenly initiates a full braking manoeuvre. Such situations in which the distance between the vehicle and the corresponding preceding vehicle equals or exceeds the respective safety distance may for example arise when the vehicle catches up with a preceding vehicle that is driving on the same lane as the vehicle at a distance greater than the respective safety distance, or when a preceding vehicle enters the lane on which the vehicle is driving, i.e. "cuts-in", at a distance from the vehicle that equals or exceeds the respective safety distance.

A situation in which the distance between the vehicle and a corresponding preceding vehicle is smaller than the respective safety distance is a situation of risk, inasmuch as, if the preceding vehicle were to perform full braking, a collision between the vehicle and the preceding vehicle could not be avoided simply by decelerating according to the predefined braking jerk profile. This can be the situation, for example, when a preceding vehicle cuts in into the lane on which the vehicle is driving within a distance from the vehicle smaller than the respective safety distance.

The detection module may further be configured for determining an acceleration and/or a velocity of the vehicle. For this purpose, the detection module may be connected with a vehicle trajectory control system configured for controlling a trajectory of the vehicle, wherein the trajectory control module may comprise a motor of the vehicle, a transmission of the vehicle, a braking system of the vehicle, a velocimeter of the vehicle, an accelerometer of the vehicle and/or a wheel motion control system of the vehicle.

The ACC system of the invention further comprises a safety module that is connected to the detection module and configured for determining, for each preceding vehicle of at least a part of the one or more detected preceding vehicles for which the determined distance is smaller than the respective safety distance, i.e. for at least some of the preceding vehicles having a distance smaller than the respective safety distance, a respective candidate target acceleration of the vehicle. The safety module is hence activated when at least one of the one or more preceding vehicles detected by the detection module is detected to be at a distance from the vehicle that is smaller than the respective safety distance. The safety module, then, selects said at least one of the one or more preceding vehicles and determines, for each one of them, a respective candidate target acceleration of the vehicle.

The "candidate target accelerations" may refer to constant acceleration values to be implemented at a particular point in time or time interval, in particular if the ACC system is configured to operate iteratively based on a cyclically repeated operation of the detection module and the safety module at discretised regular time intervals, such that for a regular iteration time interval $\Delta t$, new "candidate target accelerations" may be determined by the safety module every time interval $\Delta t$. The time interval $\Delta t$ may be for example 0,5 s or less, preferably 0,1 s or less, more preferably 0,02 s or less. The time interval $\Delta t$ may correspond to the aforesaid "predefined time interval". In some embodiments, however, the "candidate target accelerations" may each correspond to a respective acceleration function of time a(t) to be implemented over more than one iteration time interval, over a multiple of the aforesaid iteration time intervals or over a predefined time in a non-iterative approach.

The safety module comprises at least an ICS control unit and an emergency control unit. Optionally, the safety module may further comprise a nominal control unit. For each preceding vehicle associated to a determined distance smaller than the respective safety distance, the respective candidate target acceleration may be determined by the ICS control unit, the emergency control unit or by the nominal control unit.

The ICS control unit is configured for determining whether the vehicle is or will be in an inevitable collision state ("ICS") with respect to the corresponding preceding vehicle. The ICS control unit can hence determine that the vehicle is currently in an ICS state or that an ICS state is possible and/or probable within a predefined time definition or within an uncertainty range of the ICS control unit and hence the vehicle will be in an ICS state. An "inevitable collision state" or "ICS" corresponds to a state of the vehicle in which a collision with the corresponding detected preceding vehicle is inevitable regardless of a modification of the acceleration of the vehicle. In some embodiments, the safety module may define an ICS assuming for the preceding vehicles a predefined safety acceleration. The ICS control unit may be configured for determining whether the vehicle is in an inevitable collision state with respect to the corresponding preceding vehicle assuming a predetermined safety acceleration for the corresponding preceding vehicle. The safety module may hence take into account the current velocity and the minimal possible acceleration of the vehicle, as well as the determined distance and velocity of the corresponding preceding vehicle and further assume, for the preceding vehicle, the predetermined safety acceleration. The "minimal possible acceleration" of the vehicle may refer, not just to the maximal force that the braking system of the vehicle can physically exert on the wheels of the vehicle, but rather to the maximal effective resulting deceleration of the vehicle produced by the combined effect of all causes of deceleration and all systems involved in the deceleration, including, for example, aerodynamics, tyre-road friction and/or the intervention of an ABS system. Notably, these causes of deceleration may evolve in time, resulting in a timely varying, in particular progressively decreasing, absolute value of the minimal possible acceleration of the vehicle.

The ICS control unit is configured for assuming an ICS state when there is no feasible control action of the vehicle that ensures that, in this scenario, a collision with the corresponding preceding vehicle at a later time is avoided. In some ICS situations, the collision may still be avoided if the corresponding preceding vehicle accelerates, however, an ICS may be assumed anyway, since whether this happens or not cannot be controlled form the vehicle. The ICS control unit, for example a processing unit thereof, may be configured for solving the equations of motion of the vehicle and the corresponding preceding vehicle taking into account the determined velocity and distance of the corresponding preceding vehicle and taking into account the minimum possible acceleration, i.e. the maximal possible braking deceleration, achievable by the vehicle and the predefined safety acceleration assumed as a minimal possible acceleration of the corresponding preceding vehicle for determining whether the vehicle is in an ICS with respect to the that preceding vehicle, for example using analysis tools and formulae that are known to the skilled person, for instance from S. Bouraine, T. Fraichard, H. Salhi, Provably Safe Navigation for Mobile Robots with Limited Field-of-Views in Dynamic Environments, Autonomous Robots, Springer Verlag, 2012, 32 (3), pp.267-283.

If the ICS control unit determines that the vehicle is in an ICS with respect to a preceding vehicle, the ICS control unit is configured for determining the respective candidate target acceleration for that preceding vehicle corresponding to the minimal possible acceleration of the vehicle, i.e. to the maximal possible braking deceleration that the vehicle, in particular the braking system of the vehicle, can currently implement. In other words, the candidate target acceleration is determined to correspond to a full braking manoeuvre of the vehicle, such that, if the vehicle immediately implements the candidate target acceleration, i.e. the minimal possible acceleration in this case, the collision is mitigated by decelerating the vehicle as much as possible in the shortest possible time. When the emergency control unit determines the respective candidate target acceleration to correspond to the minimal possible acceleration of the vehicle, the time derivative of the acceleration (the jerk) of the vehicle may be unbounded and may correspond to the minimal possible value of the time derivative of the acceleration of the vehicle, i.e. the minimal possible jerk achievable by the vehicle. Thus, when the emergency control unit assumes an ICS, all efforts are directed to mitigating the collision without taking comfort into account: both the acceleration and the jerk of the vehicle can take up values down to the respective minimal values.

The emergency control unit is configured for determining the candidate target acceleration if the ICS control unit determines that the vehicle is not in an inevitable collision state with respect to the corresponding preceding vehicle, according to an emergency acceleration modification scheme. The emergency acceleration modification scheme is hence defined for achieving the respective safety distance within a predefined time and/or without the acceleration of the vehicle falling below a first predefined acceleration lower limit. This means that when the acceleration of the vehicle is modified according to the emergency acceleration modification scheme, the acceleration of the vehicle can evolve in different ways but it is always guaranteed - mathematically speaking by imposing corresponding constraints when solving the equations of motion of the vehicle - that the acceleration of the vehicle is modified such that the respective safety distance is achieved within the predefined time and/or such that the value of the acceleration of the vehicle is always greater than or equal to the first predefined acceleration lower limit.

The predefined time may set a time limit within which the vehicle has to establish the corresponding safety distance, in particular without the acceleration of the vehicle falling below the first predefined acceleration lower limit. The value of the predefined time may be user-defined, for example a predefined time of 1 s or less.

There may be more than one possible values of the candidate target acceleration fulfilling the conditions of the emergency acceleration modification scheme. In that case, the emergency control unit may be configured for selecting, out of all possible values of the candidate target acceleration, the value having the smallest possible absolute value, such that a variation with respect to a current acceleration of the vehicle is minimised, i.e. such that the jerk of the vehicle is as close to 0 as possible. Additionally or alternatively, the emergency control unit may be configured for selecting one candidate value among said possible values of the candidate target acceleration according to another optimisation criterion, such as minimising energy consumption.

Since an ICS has been discarded by the ICS control unit, the vehicle is in a situation in which the respective safety distance may be established by the emergency control unit without necessarily performing a full-braking of the vehicle, thereby keeping some degree of comfort.

The ACC system according to the invention hence allows determining a candidate target acceleration of the vehicle for modifying the trajectory of a vehicle, in particular an acceleration and a velocity thereof, in different manners according to different situations, thereby permitting to adapt a comfort level depending on the safety requirements of the different situations.

In a first situation, in case of an ICS, for example as a result of a cutting-in preceding vehicle entering the lane on which the vehicle is driving at a distance from the vehicle below the corresponding safety distance, comfort is disregarded in order to mitigate an eventual collision as much as possible within the shortest possible time by immediately selecting the minimal possible acceleration, discomforting to the occupants of the vehicle though this may be.

In a second situation, in case a preceding vehicle is violating the corresponding safety distance but without causing the vehicle to be in an ICS, the respective safety distance can still be established before a collision without decelerating the vehicle with the minimal possible acceleration of the vehicle, in particular respecting the boundary conditions defined by the emergency acceleration modification scheme.

In some embodiments, the emergency control unit may further be configured for determining, based on the respective distance and the respective velocity, an emergency jerk profile defining a time evolution of the time derivative of the acceleration of the vehicle allowing to achieve the respective safety distance within the predefined time and/or without the acceleration of the vehicle falling below the first predefined acceleration lower limit. Additionally or alternatively, the emergency control unit may further be configured for determining, based on the respective distance and the respective velocity, an emergency acceleration profile defining a time evolution of the acceleration of the vehicle allowing to achieve the respective safety distance within the predefined time and/or without the acceleration of the vehicle falling below the first predefined acceleration lower limit. The emergency control unit may then be configured for determining the respective candidate target acceleration according to the emergency jerk profile and/or to the emergency acceleration profile.

The emergency acceleration profile $a_{emergency}$ (t) and/or the emergency jerk profile $j_{emergency}(t)$ are hence generated as a time evolution of the acceleration and jerk of the vehicle respectively, for which the conditions of the emergency acceleration modification scheme are fulfilled taking into account the distance and velocity that have been determined for the corresponding preceding vehicle.

Preferably the emergency acceleration profile $a_{emergency}$ (t) and/or the emergency jerk profile $j_{emergency}(t)$ may be chosen among all possible time evolutions of the acceleration and jerk of the vehicle, respectively, fulfilling the conditions of the emergency acceleration modification scheme for which the minimal jerk value is maximal (in order to maximise comfort). Since the emergency acceleration profile $a_{emergency}$ (t) and/or the emergency jerk profile $j_{emergency}(t)$ may in particular correspond to a deceleration of the vehicle and may be functions taking negative values only, maximising the minimal jerk value may correspond to having a minimal jerk value as close as possible to zero, i.e. the least negative minimal jerk value possible. The emergency acceleration and jerk profiles can hence define the most comfortable possible way of modifying the acceleration of the vehicle in line with the emergency acceleration modification scheme for the respective distance and the respective velocity determined for the corresponding preceding vehicle.

The safety module of the ACC system of the invention may further comprise a nominal control unit configured for determining, if the ICS control unit determines that the vehicle is not in an inevitable collision state with respect to the corresponding preceding vehicle, whether the respective safety distance can be achieved by modifying the acceleration of the vehicle according to a comfort acceleration modification scheme. The comfort acceleration modification scheme may be different from the emergency acceleration modification scheme. The comfort acceleration modification scheme is defined for achieving the respective safety distance within the predefined time and without a time derivative of the acceleration of the vehicle falling below a predefined acceleration derivative lower limit and/or without an acceleration of the vehicle falling below a second predefined acceleration lower limit. The second predefined acceleration lower limit may be larger than the first of predefined acceleration lower limit defined for the emergency acceleration modification scheme.

Determining whether or not the respective safety distance can be achieved by modifying the acceleration of the vehicle according to a comfort acceleration modification scheme may comprise accessing a lookup table saved in a storing device comprised in or connected to the safety module, wherein the lookup table may comprise a large number of previously computed solutions to the equations of motion of the vehicle for different values of the corresponding distance and velocity of a preceding vehicle. For example, if one of such computed solutions stored in the lookup table determines that, for given values of the velocity of the vehicle and of the corresponding distance and velocity of a preceding vehicle, it is not possible to establish the corresponding safety distance within the predetermined time and without the time derivative of the acceleration of the vehicle falling below the predefined acceleration derivative lower limit, the region of states having smaller values of the corresponding distance of the preceding vehicle, smaller values of the corresponding velocity of the preceding vehicle and larger velocities of the vehicle may also be assumed to correspond to a situation in which it is not possible to establish the corresponding safety distance according to the comfort acceleration modification scheme. If, according to the values stored in the lookup table, the conditions of the comfort acceleration modification scheme can be achieved by at least one solution in which the acceleration of the vehicle takes a given acceleration value or a given acceleration function, the corresponding candidate target acceleration can be determined to correspond to said at least one solution. There may be more than one possible values of the candidate target acceleration fulfilling the conditions of the comfort acceleration modification scheme. In that case, the nominal control unit may be configured for selecting, out of said possible values of the acceleration fulfilling the conditions of the comfort acceleration modification scheme, the possible value having the smallest absolute value as the candidate target acceleration.

While the emergency acceleration modification scheme is defined by the boundary conditions that the respective safety distance should be achieved within the predefined time and/or without the acceleration of the vehicle falling below the first predefined acceleration lower limit, the comfort acceleration modification scheme is defined by the boundary conditions that the respective safety distance should also be achieved within the predefined time and, additionally, should be achieved without a time derivative of the acceleration of the vehicle (i.e. a jerk of the vehicle) falling below a predefined acceleration derivative lower limit (i.e. a jerk lower limit) and/or without an acceleration of the vehicle falling below a second predefined acceleration lower limit that may be larger than the first predefined acceleration lower limit. The comfort acceleration modification scheme is hence more restrictive than the emergency acceleration modification scheme but may provide a larger degree of comfort if the acceleration of the vehicle is modified according to the comfort acceleration modification scheme.

The nominal control unit is further configured for determining the respective candidate target acceleration according to the comfort acceleration modification scheme if this is feasible, i.e. if the nominal control unit determines that the respective safety distance can be achieved by modifying the acceleration of the vehicle according to the comfort acceleration modification scheme.

The emergency control unit may further be configured for determining the candidate target acceleration according to the emergency acceleration modification scheme if the nominal control unit determines that the respective safety distance cannot be achieved by modifying the acceleration of the vehicle according to the comfort acceleration modification scheme and the ICS control unit determines that the vehicle is not in an inevitable collision state with respect to the corresponding preceding vehicle.

The nominal control unit hence aims at determining a candidate target acceleration allowing to establish the corresponding safety distance within the predefined time in a comfort-optimised manner, without the jerk of the vehicle falling below the predefined acceleration derivative lower limit and/or without the acceleration of the vehicle falling below the second predefined acceleration lower limit. This comfortable solution is preferred, if possible, over the less comfortable solutions provided by the emergency control unit and the ICS control unit. In particular, the candidate target acceleration is determined by the emergency control unit when it cannot be feasibly be determined by the nominal control unit. In other words, if a more comfortable manner (according to the comfort acceleration modification scheme) of establishing safety can be found, said more comfortable manner is prioritised over the less comfortable manner (according to the emergency acceleration modification scheme).

A minimal value of the acceleration of the vehicle or the time derivative thereof according to the comfort acceleration modification scheme may be greater than a minimal value of the acceleration of the vehicle or the time derivative thereof according to the emergency acceleration modification scheme. Both the emergency acceleration modification scheme and the comfort acceleration modification scheme may be configured for achieving the safety distance within the predefined time. However, while the comfort acceleration modification scheme is bounded to not letting the time derivative of the acceleration of the vehicle fall below the predefined acceleration derivative lower limit, the emergency acceleration modification scheme is not bounded to this condition. Thus, in some situations, it is possible to establish the corresponding safety distance within the predefined time according to the emergency acceleration modification scheme but not according to the comfort acceleration modification scheme. In other words, when the acceleration of the vehicle is modified according to the emergency acceleration modification scheme, the vehicle may decelerate more rapidly than when the acceleration of the vehicle is modified according to the comfort acceleration modification scheme.

In some embodiments, the nominal control unit may be configured for determining whether the respective safety distance can be achieved according to the comfort acceleration modification scheme assuming that the corresponding preceding vehicle moves at a constant velocity corresponding to the determined respective velocity. The computations may thereby be simplified without substantially compromising safety or comfort.

According to some embodiments, the nominal control unit may further be configured for, if the nominal control unit determines that the respective safety distance can be achieved by modifying the acceleration of the vehicle according to the comfort acceleration modification scheme, determining, based on the respective distance and the respective velocity determined for the corresponding preceding vehicle, a comfort jerk profile defining a time evolution of the time derivative of the acceleration of the vehicle allowing to achieve the respective safety distance within the predefined time without a time derivative of the acceleration of the vehicle falling below the predefined acceleration derivative lower limit and/or without the acceleration of the vehicle falling below the second acceleration lower limit. Additionally or alternatively, the nominal control unit may further be configured for determining, based on the respective distance and the respective velocity, a comfort acceleration profile defining a time evolution of the acceleration of the vehicle allowing to achieve the respective safety distance within the predefined time without a time derivative of the acceleration of the vehicle falling below the predefined acceleration derivative lower limit and/or without the acceleration of the vehicle falling below the second acceleration lower limit. The nominal control unit may then be configured for determining the respective candidate target acceleration according to the comfort jerk profile and/or the comfort acceleration profile.

The comfort acceleration profile and/or the comfort jerk profile $j_{comfort}(t)$ are hence generated as a time evolution of the acceleration and/or jerk of the vehicle, respectively, for which the conditions of the comfort acceleration modification scheme are fulfilled taking into account the distance and velocity that have been determined for the corresponding preceding vehicle. Preferably, the comfort acceleration profile $a_{comfort}(t)$ and/or the comfort jerk profile $j_{comfort}(t)$ are chosen among all possible time evolutions of the acceleration and jerk of the vehicle, respectively, which fulfil the conditions of the comfort acceleration modification scheme and for which the minimal jerk value is maximal, i.e. least negative (in order to maximise comfort). The comfort jerk profile may hence define the most comfortable possible way of modifying the acceleration of the vehicle in line with the comfort acceleration modification scheme for the respective distance and the respective velocity determined for the corresponding preceding vehicle.

Conditions such as "without a time derivative of the acceleration of the vehicle falling below the predefined acceleration derivative lower limit" ($j_{comfort}(t) \geq j_{min}$ for all t) and "without the acceleration of the vehicle falling below the second acceleration lower limit" ($a_{comfort}(t) \geq a_{min}$ for all t) may be imposed as corresponding constraints when solving the corresponding equations of motion of the vehicle used for determining the corresponding profile.

Notably, while the customisable predefined braking acceleration modification scheme is defined by a predetermined function that may be stored in a storage device comprised in or connected to the ACC system, the comfort profiles (for acceleration and for jerk) and the emergency profiles (for acceleration and for jerk) need not be stored in any storage device inasmuch as they are not predetermined functions but functions that are computed in real time and adapted to a particular situation, i.e. to a particular preceding vehicle and to the respective distance and velocity as determined by the detection module.

"According to the comfort acceleration profile" may refer herein to a time evolution of the acceleration of the vehicle according to the acceleration of the vehicle defined by the comfort acceleration profile, such that for a time evolution over a time interval $\Delta t$ according to the comfort acceleration profile corresponding to a function $a_{comfort}(t)$ one has:

$$a(t) = a_{comfort}(t)$$

Likewise, "according to the emergency acceleration profile" may refer herein to a time evolution of the acceleration of the vehicle according to the acceleration of the vehicle defined by the emergency acceleration profile, such that for a time evolution over a time interval $\Delta t$ according to the emergency acceleration profile corresponding to a function $j_{emergency}(t)$ one has:

$$a(t) = a_{emergency}(t)$$

"According to the comfort jerk profile" may refer herein to a time evolution of the acceleration of the vehicle according to the time derivative of the acceleration of the vehicle defined by the comfort jerk profile, such that for a time evolution over a time interval $\Delta t$ according to a comfort jerk profile corresponding to a function $j_{comfort}(t)$ one has:

$$a(t) = a(t - \Delta t) + \int_{t-\Delta t}^{t} j_{comfort}(t)dt.$$

"According to the emergency jerk profile" may refer herein to a time evolution of the acceleration of the vehicle according to the time derivative of the acceleration of the vehicle defined by the emergency jerk profile, such that for a time evolution over a time interval $\Delta t$ according to an emergency jerk profile corresponding to a function $j_{emergency}(t)$ one has:

$$a(t) = a(t - \Delta t) + \int_{t-\Delta t}^{t} j_{emergency}(t)dt.$$

Preferably, the emergency control unit may be configured for determining the emergency jerk profile and/or the emergency acceleration profile if the nominal control unit determines that the respective safety distance cannot be achieved by modifying the acceleration of the vehicle according to the comfort acceleration modification scheme and/or if the ICS control unit determines that the vehicle is not in an inevitable collision stayed with respect to the corresponding preceding vehicle. Accordingly, the emergency jerk profile and/or the emergency acceleration profile may define the most comfortable possible way of modifying the acceleration of the vehicle for the respective distance and the respective velocity determined for the corresponding preceding vehicle when it is not possible to do so according to the comfort acceleration modification scheme.

The ACC system according to the invention may hence allow determining a candidate target acceleration of the vehicle for modifying the trajectory of a vehicle, in particular an acceleration and a velocity thereof, in different manners according to different situations, thereby permitting to adapt a comfort level depending on the safety requirements of the different situations: Additionally to the first situation and a second situation described above, in a third situation, in case the ACC system includes the nominal controller and it is determined that it is possible for the vehicle to establish the corresponding safety distance with the cutting-in preceding according to the comfort acceleration modification scheme, the trajectory of the vehicle is modified in a comfortable manner, such that the deceleration may be hardly perceivable for the occupants of the vehicle.

Determining the respective candidate target acceleration according to the comfort acceleration modification scheme by the nominal control unit may comprise determining the respective candidate acceleration as a first acceleration value $\alpha_1$, and determining the respective candidate target acceleration according to the emergency acceleration modification scheme by the emergency control unit may comprise determining the respective candidate acceleration as a second acceleration value $\alpha_2$, wherein the first acceleration value is greater than the second acceleration value $\alpha_1 > \alpha_2$. Thus, the first acceleration value may correspond to less deceleration than the second acceleration value, thereby reflecting a difference in the jerk of the vehicle, which may be smaller (more negative) when the candidate target acceleration is determined according to the emergency acceleration modification scheme than when it is determined according to the comfort acceleration modification scheme. For example, the first and second acceleration values $\alpha_1$ and $\alpha_2$ may correspond to constant values of the acceleration of the vehicle to be implemented according to the corresponding time-dependent jerk profile (the comfort jerk profile or the emergency jerk profile) in a discretised timeline during a given item iteration time interval, such that:

$$\alpha_1 = a_n = a_{n-1} + Int_n\big(j_{comfort}\big), for\ t = n \cdot \Delta t;$$

$$\alpha_2 = a_n = a_{n-1} + Int_n\big(j_{emergency}\big), for\ t = n \cdot \Delta t.$$

where $Int_n(\ )$ denotes a function corresponding to a numerical integration of the corresponding jerk function. Notably, the comparison between the first and second acceleration values is a fictitious comparison, inasmuch as both values might not coexist for a given preceding vehicle, since only one of them may be determined according to the situation of the vehicle with respect to the corresponding preceding vehicle. However, due to the differences between the emergency acceleration modification scheme and the comfort acceleration modification scheme, and in particular to the bounds applying to the comfort acceleration modification scheme (cf. the predefined time and the jerk lower limit and/or the second acceleration lower limit), which do not apply to the emergency acceleration modification scheme, it can be inferred that the acceleration value to be implemented according to the comfort acceleration modification scheme, i.e. the first acceleration value $\alpha_1$, may be greater than the acceleration to be implemented according to the emergency acceleration modification scheme, i.e. than the second acceleration value $\alpha_2$.

Since the acceleration derivative lower limit and/or the (second) acceleration lower limit applying to the comfort acceleration modification scheme do not apply to the emergency acceleration modification scheme, one may also assert that a minimal jerk and/or acceleration value according to the comfort acceleration modification scheme may be greater than a minimal jerk and/or acceleration value according to the emergency acceleration modification scheme. This means, that when the acceleration of the vehicle is modified according to the comfort acceleration modification scheme, the variation of the acceleration over time may be not as negative, i.e. as abrupt, as it can be when the acceleration of the vehicle is modified according to the emergency acceleration modification scheme.

According to some embodiments of the invention, the ACC system may further comprise a distance control module connected with the detection module and configured for, for each of at least a part of the one or more preceding vehicles for which the determined respective distance equals or exceeds the respective safety distance, determining whether the vehicle is in a potential collision state with respect to the corresponding preceding vehicle. This means that for those preceding vehicles for which the safety module is not activated because they are not at a distance from the vehicle smaller than the respective safety distance, the distance control module is activated to determine whether a potential collision state exists with respect to the corresponding preceding vehicle.

A "potential collision state" corresponds to a state of the vehicle in which, if the corresponding preceding vehicle initiates a full braking manoeuvre (i.e. brakes with a real or assumed minimal acceleration of the preceding vehicle, in particular the aforementioned predefined minimal possible acceleration), a distance between the vehicle and the corresponding preceding vehicle will become smaller than the respective safety distance within a predefined time interval unless the acceleration of the vehicle is modified. The predefined time interval may preferably correspond to the afore-mentioned iteration time interval $\Delta t$. A potential collision state may be determined by the distance control module when, taking into account the current trajectory, i.e. acceleration and velocity, of the vehicle as well as the full braking manoeuvre assumed for the corresponding preceding vehicle and the detected respective distance, the time evolution of the equations of motion of the vehicle and the corresponding preceding vehicle reveal that the respective safety distance, which is currently respected, is about to the violated.

If the distance control module determines that the vehicle is in a potential collision state with respect to the corresponding preceding vehicle, the distance control module is further configured for determining a corresponding candidate target acceleration according to a predetermined distance control acceleration modification scheme. The distance control acceleration modification scheme may be configured for keeping at least the safety distance between the vehicle and the preceding vehicle at least within said predefined time interval, wherein said corresponding candidate target acceleration is preferably smaller than a current acceleration of the vehicle and/or equal to or smaller than a candidate target acceleration that would be determined according to the predetermined braking acceleration modification scheme.

In other words, when a potential collision state is determined by the distance control module, the distance control module determines the corresponding candidate target acceleration which, if implemented for modifying the acceleration of the vehicle, makes the vehicle decelerate such that the corresponding safety distance continues to be respected. Instead, if the distance control module determines that the vehicle is not in a potential collision state with respect to the corresponding preceding vehicle, the trajectory of the vehicle, in particular the acceleration, may be left unmodified.

In some embodiments, the distance control acceleration modification scheme may correspond to the predefined braking acceleration modification scheme used for defining the safety distances. This way, even if the preceding vehicle were to suddenly initiate a full-braking manoeuvre during the current iteration interval, a potential collision could still be avoided after detecting it during the next iteration interval, in particular by modifying the acceleration of the vehicle according to the predefined braking acceleration modification scheme.

The distance control module, which is activated for preceding vehicles respecting the corresponding safety distance for which the activation of the safety module is not necessary, is configured for ensuring that no trajectory modification is implemented which would subsequently lead to a violation of the corresponding safety distance. Thus, as far as the controllable behaviour of the vehicle is concerned, the safety distance with respect to the preceding vehicles is always maintained. If a preceding vehicle suddenly violates the corresponding safety distance, for example by laterally cutting-in into the lane on which the vehicle is driving at a distance from the vehicle below the corresponding safety distance, the safety module is activated to resolve the situation as described above. Otherwise, the distance control module ensures that the safety distance with respect to each preceding vehicle is always maintained, modifying the acceleration of the vehicle, in particular by modifying the acceleration of the vehicle according to the distance control acceleration modification scheme, if necessary by correspondingly determining the candidate target acceleration.

Modifying the acceleration of the vehicle according to the distance control acceleration modification scheme by the distance control module may comprise modifying the acceleration of the vehicle according to a predefined distance control acceleration profile and/or to a predefined distance control jerk profile, and the distance control module may be correspondingly configured. The distance control acceleration profile and/or the distance control jerk profile may be a monotonously decreasing time-dependent function and may be bounded to a predefined minimal jerk. By modifying the acceleration of the vehicle according to the distance control acceleration profile and/or the distance control jerk profile, the deceleration of the vehicle can be controlled in a comfortable manner in case a potential collision state is determined. The distance control acceleration profile and/or the distance control jerk profile may be customisable.

According to some embodiments, said at least a part of the one or more detected preceding vehicles for which the determined distance is smaller than the respective safety distance, i.e. the preceding vehicles for which the safety module is activated to determine the corresponding candidate target accelerations, and/or said at least a part of the one or more preceding vehicles for which the determined distance equals or exceeds the respective safety distance, i.e. the preceding vehicles for which the distance control module is activated to determine the corresponding candidate target accelerations, comprises in each case, preceding vehicles for which an exclusion condition is not fulfilled, wherein the exclusion condition is fulfilled for a given preceding vehicle if

- another detected preceding vehicle exists for which the determined distance and the determined velocity are respectively smaller than the distance and velocity determined for said given preceding vehicle; and/or

- a difference between the distance determined for said given preceding vehicle and a stopping distance of the vehicle is equal to or greater than zero or a security margin, wherein the stopping distance of the vehicle corresponds to a distance covered by the vehicle until the vehicle comes to a zero-velocity in particular according to the predefined braking acceleration modification scheme.

If any or both of the aforesaid two conditions are fulfilled for a given preceding vehicle, the exclusion condition is fulfilled, which means that said given preceding vehicle does not belong to the at least a part of the one or more detected preceding vehicles for which a corresponding candidate target acceleration is determined by the safety module or the distance control module. In other words, if exclusion condition is fulfilled by a given preceding vehicle, said given preceding vehicle is ignored in terms of determining candidate target accelerations. This is justified as follows:
For the first condition: if there exists another preceding vehicle for which the determined distance and the determined velocity are respectively smaller than the distance and velocity determined for said given preceding vehicle this means that the given preceding vehicle is a faster preceding vehicle that can be ignored, in particular when it is assumed that all preceding vehicles have the same minimal acceleration (i.e. the same maximal deceleration), since a collision with said given preceding vehicle can be excluded if it is avoided for said another preceding vehicle, i.e. for the slower and closer preceding vehicle.

For the second condition: if the difference between the distance determined for said given preceding vehicle and the stopping distance of the vehicle is equal to or greater than zero or a security margin, this means that, even if the given preceding vehicle were to instantaneously stop at a position corresponding to the (current) respective detected position, the vehicle, moving with its current velocity and preferably accelerating as much as possible, according to a maximal acceleration of the vehicle, could still stop in time to avoid a collision with said given preceding vehicle, in particular according to the predefined braking acceleration modification scheme. The security margin may correspond to a distance covered by the vehicle during the predefined time interval, in particular while maintaining the current trajectory and preferably with the maximal possible acceleration of the vehicle, such as to account for the dynamics of the vehicle during the current iteration.

In any of the considered cases, if the given preceding vehicle fulfils the exclusion condition, it may be ignored in order to spare computational resources because it is not relevant for guaranteeing the safety of the vehicle for practical purposes. The candidate target accelerations are then only computed for preceding vehicles that are relevant for ensuring the safety of the vehicle, i.e. for preceding vehicles not fulfilling the exclusion condition.

In some embodiments, the ACC system of the invention may further comprise a selection module configured for selecting, among all candidate target accelerations determined by the safety module or the distance control module, a minimal candidate target acceleration, wherein the minimal candidate target acceleration is smaller than all other candidate target accelerations. By selecting the minimal candidate target acceleration, the selection module ensures the selection of the candidate target acceleration required for ensuring the safety of the vehicle in view of the preceding vehicle causing the most dangerous situation, i.e. requiring the greatest deceleration. This is implemented by having the safety module and the distance control module determine the respective candidate target accelerations for the corresponding preceding vehicles and then selecting, by the selection module, the smallest candidate target acceleration, i.e. the strongest deceleration needed.

According to some embodiments, the ACC system may further comprise a velocity control module connected with the detection module and configured for determining a target velocity of the vehicle configured for not exceeding a detection range velocity. The detection range velocity is a maximal velocity from which the vehicle can transition to a zero-velocity state over a detection range distance, preferably from a state of maximal acceleration of the vehicle (in order to maximise the safety margin) and/or according to the predefined braking acceleration modification scheme. The detection range distance is the maximum distance from the vehicle at which a preceding vehicle can be detected by the detection module. For example, if the detection range distance is 200 m, a preceding vehicle can be detected at a distance up to 200 m from the vehicle, while it cannot be detected at a distance greater than 200 m from the vehicle.

Once the detection module detects one or more preceding vehicles, the safety module and/or the distance control module are activated for determining the corresponding candidate target accelerations. The safety module is activated if at least one of the one or more preceding vehicles is detected at a distance from the vehicle smaller than the corresponding safety distance, for example in case of a preceding vehicle cutting-in in front of the vehicle at a distance smaller than the corresponding safety distance. The distance control module may be activated irrespectively of whether at least one of the one or more preceding vehicles is detected at a distance from the vehicle equal to or greater than the corresponding safety distance or not.

The present invention further refers to a vehicle comprising a vehicle trajectory control system and an ACC system according to any of the previously described embodiments. The vehicle trajectory control system is configured for controlling an acceleration and/or a velocity of the vehicle according to a target velocity or to a candidate target acceleration determined by the ACC system, respectively. The vehicle trajectory control system may comprise, for example, a motor, a transmission system and/or a braking system of the vehicle allowing to selectively accelerate or decelerate the vehicle in a controlled manner. In the ACC system, candidate target accelerations may be determined by the safety module and/or by the distance control module for corresponding preceding vehicles.

Preferably, the vehicle trajectory control system may be configured for controlling the acceleration and/or the velocity of the vehicle according to a minimal candidate target acceleration selected among a plurality of candidate target accelerations determined for a corresponding plurality of detected preceding vehicles, for example by a selection module of the ACC system. Depending on the situation, for example in case no preceding vehicle is detected by the detection module of the ACC system, no candidate target acceleration may be determined but a velocity control module of the ACC system may determine a detection range velocity. The vehicle trajectory control system may hence also be configured for controlling the velocity of the vehicle according to a target velocity corresponding to the detection range velocity of the vehicle.

The vehicle of the invention, by means of the ACC system it comprises, is able to implement adaptive cruise control in a safe manner with improved comfort, sacrificing comfort on behalf of safety when necessary, but providing improved comfort when safety so allows.

The present invention further refers to a method of determining a target acceleration of a vehicle. The method may be a computer-implemented method and/or a method implemented by an ACC system according to any of the embodiments described above, wherein the described modules, in particular the detection module, the safety module, the velocity control module, the selection module and the distance control module may be or correspond to different modules of a software product implemented by one or more processors. However, the described modules, in particular the detection module, the safety module, the velocity control module, the selection module and the distance control module may be or correspond to different correspondingly configured processors.

The method comprises detecting one or more preceding vehicles driving ahead of the vehicle, in particular one or more preceding vehicles driving on the same lane as the vehicle. The one or more preceding vehicles may be detected by the detection module of the ACC system of the invention.

The method further comprises, determining a velocity and a distance of each of the one or more detected preceding vehicles with respect to the vehicle, in particular by the detection module of the ACC system of the invention. Determining the respective velocities and distances may comprise, in each case, directly measuring corresponding velocities and distances or receiving and interpreting signals containing information about the corresponding velocities and distances, for example by means of an inter-vehicle communication system.

The method further comprises determining the target acceleration by determining, for each preceding vehicle of at least a part of the one or more detected preceding vehicles, i.e. for each or some of the detected preceding vehicles, a respective candidate target acceleration, and by selecting as the target acceleration the minimal candidate target acceleration, i.e. the smallest candidate target acceleration among all determined candidate target accelerations.

Determining a corresponding candidate target acceleration of a corresponding preceding vehicle comprises in each case, determining whether the corresponding determined distance is smaller than a respective safety distance, which corresponds to the safety distance described above for the ACC system of the invention. The safety distance ($sd_i$) may hence in particular correspond to a distance between the vehicle ($V_0$) and a corresponding preceding vehicle ($V_i$) over which the vehicle ($V_0$) can stop without a collision with the corresponding preceding vehicle ($V_i$) in case of a full braking of the corresponding preceding vehicle ($V_i$), preferably from a state of maximal acceleration of the vehicle and/or according to a predefined braking jerk profile (corresponding to the previously described predefined braking jerk profile). If the corresponding determined distance is smaller than the respective safety distance, the method further comprises:

Determining whether the vehicle is or will be in an inevitable collision state with respect to the corresponding preceding vehicle, and, if the vehicle is in an inevitable collision state with respect to the corresponding preceding vehicle, determining the corresponding candidate target acceleration as a minimal possible acceleration of the vehicle. As previously explained, the inevitable collision state corresponds to a state of the vehicle in which a collision with the corresponding preceding vehicle is inevitable regardless of a modification of the acceleration of the vehicle, in particular assuming for the corresponding preceding vehicle a predetermined safety acceleration; and

if the vehicle is not in an inevitable collision state with respect to the corresponding preceding vehicle, determining the corresponding candidate target acceleration according to an emergency acceleration modification scheme, wherein the emergency acceleration modification scheme is defined for achieving the respective safety distance within a predefined time and/or without the acceleration of the vehicle falling below a first predefined acceleration lower limit.

In some embodiments, if the corresponding determined distance is smaller than the respective safety distance and the vehicle is not in an inevitable collision state with respect to the corresponding preceding vehicle, determining the corresponding candidate target acceleration for a corresponding preceding vehicle may further comprise:

determining whether it is feasible to achieve the respective safety distance by modifying the acceleration of the vehicle according to a comfort acceleration modification scheme, wherein the comfort acceleration modification scheme is defined for achieving the respective safety distance within a predefined time and/or without a time derivative of the acceleration of the vehicle falling below a predefined acceleration derivative lower limit and/or without an acceleration of the vehicle falling below a second predefined acceleration lower limit, and

if it is feasible to achieve the respective safety distance according to the comfort acceleration modification scheme, determining the corresponding candidate target acceleration according to the comfort acceleration modification scheme. The corresponding candidate target acceleration may then be determined according to the emergency acceleration modification scheme if the vehicle is not in an inevitable collision state with respect to the corresponding preceding vehicle and it is not feasible to achieve the respective safety distance according to the comfort acceleration modification scheme.

Determining whether it is feasible to achieve the respective safety distance by modifying the acceleration of the vehicle according to a comfort acceleration modification scheme may comprise assuming that the corresponding preceding vehicle moves at a constant velocity, preferably corresponding to the determined respective velocity.

The method may further comprise determining, based on the respective distance and the respective velocity determined for the corresponding preceding vehicle, an emergency jerk profile defining a time evolution of the time derivative of the acceleration of the vehicle allowing to achieve the respective safety distance within the predefined time and/or without the acceleration of the vehicle falling below the first predefined acceleration lower limit. Additionally or alternatively, the method may comprise determining, based on the respective distance and the respective velocity, an emergency acceleration profile defining a time evolution of the acceleration of the vehicle allowing to achieve the respective safety distance within the predefined time and/or without the acceleration of the vehicle falling below the first predefined acceleration lower limit. Determining the respective candidate target acceleration according to the emergency acceleration modification scheme may then comprise determining the respective candidate target acceleration according to the emergency jerk profile and/or to the emergency acceleration profile.

In some embodiments, the method may further comprise determining, based on the respective distance and the respective velocity determined for the corresponding preceding vehicle, an emergency jerk profile defining a time evolution of the time derivative of the acceleration of the vehicle allowing to achieve the respective safety distance within the predefined time ($t_c$) and without the acceleration of the vehicle falling below the predefined acceleration lower limit and/or without the acceleration of the vehicle falling below the second acceleration lower limit. Additionally or alternatively, the method may comprise determining, based on the respective distance and the respective velocity, a comfort acceleration profile defining a time evolution of the acceleration of the vehicle allowing to achieve the respective safety distance within the predefined time without a time derivative of the acceleration of the vehicle falling below the predefined acceleration derivative lower limit and/or without the acceleration of the vehicle falling below the second acceleration lower limit. Determining the respective candidate target acceleration according to the emergency acceleration modification scheme may then comprise determining the respective candidate target acceleration according to the comfort jerk profile and/or to the comfort acceleration profile.

Preferably, the emergency jerk profile and/or the emergency acceleration profile may be determined if the respective safety distance cannot be achieved by modifying the acceleration of the vehicle according to the comfort acceleration modification scheme and/or if the vehicle is not in an inevitable collision stayed with respect to the corresponding preceding vehicle.

Determining whether the vehicle is in an inevitable collision state with respect to the corresponding preceding vehicle may comprise assuming a predetermined safety acceleration for the corresponding preceding vehicle.

Determining the respective candidate target acceleration according to the comfort acceleration modification scheme may comprise determining the respective candidate acceleration as a first acceleration value; and wherein determining the respective candidate target acceleration according to the emergency acceleration modification scheme comprises determining the respective candidate acceleration as a second acceleration value; wherein the first acceleration value is greater than the second acceleration value.

A minimal value of the acceleration of the vehicle or the time derivative thereof according to the comfort acceleration modification scheme may be greater than a minimal value of the acceleration of the vehicle or the time derivative thereof according to the emergency acceleration modification scheme.

In some embodiments, determining the corresponding candidate target acceleration of a corresponding preceding vehicle may further comprise, if the corresponding determined distance equals or exceeds the respective safety distance, determining whether the vehicle is in a potential collision state with respect to the corresponding preceding vehicle, wherein the potential collision state corresponds to a state of the vehicle in which if the corresponding preceding vehicle initiates a full braking manoeuvre a distance between the vehicle and the corresponding preceding vehicle will become smaller than the respective safety distance within a predefined time interval unless the acceleration of the vehicle is modified (as previously defined). If the vehicle is in a potential collision state with respect to the corresponding preceding vehicle, determining the corresponding candidate target acceleration of a corresponding preceding vehicle may further comprise determining the corresponding candidate target acceleration ($cta_i$) according to a predetermined distance control acceleration modification scheme. The distance control acceleration modification scheme may correspond to the predefined braking acceleration modification scheme.

According to some embodiments, said at least a part of the one or more detected preceding vehicles, i.e. the preceding vehicles for which a respective candidate target acceleration is determined, comprises preceding vehicles for which an exclusion condition is not fulfilled, wherein the exclusion condition is fulfilled for a given preceding vehicle if

- there exists another preceding vehicle for which the determined distance and the determined velocity are respectively smaller than the distance and velocity determined for said given preceding vehicle; and/or

- a difference between the distance determined for said given preceding vehicle and a stopping distance of the vehicle is equal to or greater than zero or a security margin, wherein the stopping distance of the vehicle corresponds to a distance covered by the vehicle until the vehicle comes to a zero-velocity state when performing a full braking manoeuvre until, in particular according to a predefined braking acceleration modification scheme.

This exclusion condition corresponds to the exclusion condition previously described for the ACC system of the invention.

In preferred embodiments of the invention, the method may be repeated in regular time intervals. Preferably, the regular time intervals may correspond to the aforementioned iteration time interval $\Delta t$, such that the steps of detecting one or more preceding vehicles, determining a velocity and a distance of each of them, and determining a target acceleration, may be cyclically repeated every time interval $\Delta t$.

In some embodiments, the method may further comprise determining a target velocity of the vehicle configured for not exceeding a detection range velocity, wherein the detection range velocity is a maximal velocity from which the vehicle can transition to a zero-velocity state over a detection range distance, wherein the detection range distance is the maximum distance from the vehicle at which a preceding vehicle can be detected by the detection module, preferably from a state of maximal acceleration of the vehicle and/or according to a predefined braking acceleration modification scheme, in particular from a state of maximal acceleration of the vehicle and/or according to a predefined braking acceleration modification scheme.

BRIEF DESCRIPTION OF THE DRAWINGS

Fig. 1    shows a schematic representation of a vehicle according to embodiments of the invention.

Fig. 2    schematically illustrates an adaptive cruise control system according to embodiments of the invention connected to a vehicle trajectory control system.

Fig. 3    schematically illustrates a first traffic situation of a vehicle with no preceding vehicles driving ahead of the vehicle.

Fig. 4    schematically illustrates an exemplary predefined braking jerk profile.

Fig. 5    schematically illustrates a second traffic situation of a vehicle with preceding vehicles driving ahead of the vehicle.

Fig. 6    schematically illustrates a third traffic situation of a vehicle with preceding vehicles driving ahead of the vehicle.

Fig. 7    shows a flow diagram schematically illustrating a method of determining a candidate target acceleration of a vehicle according to embodiments of the invention.

Fig. 8    schematically illustrates an exemplary comfort jerk profile (Fig. 8a) and an exemplary emergency jerk profile (Fig. 8b).

Fig. 9    shows a flow diagram schematically illustrating a method of determining a target acceleration of a vehicle according to embodiments of the invention.

DESCRIPTION OF PREFERRED EMBODIMENTS

For the purposes of promoting an understanding of the principles of the invention, reference will now be made to a preferred embodiment illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to one skilled in the art to which the invention relates.

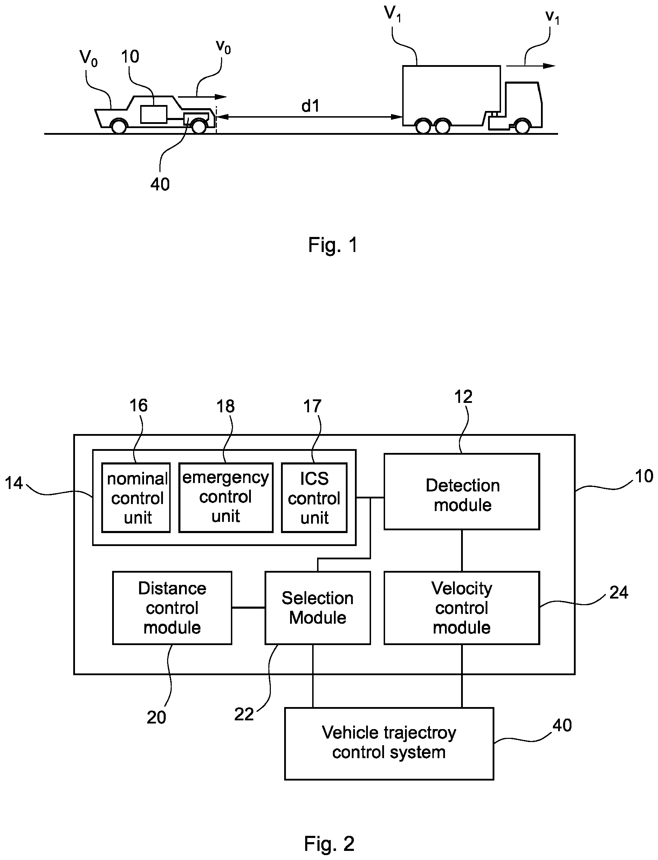

Fig. 1 schematically illustrates a situation in which a vehicle $V_0$ comprising a vehicle trajectory control system 40 and an adaptive cruise control (ACC) system 10 is driving on a road. The vehicle trajectory control system 40 is configured for controlling an acceleration $a_0$ and a velocity $v_0$ of the vehicle $V_0$ and can comprise, for example, the motor, the transmission system and the braking system of the vehicle $V_0$. The vehicle trajectory control system 40 is operatively connected with the ACC system 10 and can adjust the acceleration and the velocity of the vehicle $V_0$ based on a control instruction received from the ACC system 10.

Ahead of the vehicle $V_0$, at a distance $d_1$ from the vehicle $V_0$, a preceding vehicle $V_1$ is driving in the same direction as the vehicle $V_0$ with a velocity $v_1$. As seen in Fig. 1, the distance $d_1$ is measured between the front bumper of the vehicle $V_0$ and the rear bumper of the preceding vehicle $V_1$.

Fig. 2 shows a schematic view of the components of the ACC system 10 of the vehicle $V_0$. The ACC system

10 comprises a detection module 12, a safety module 14, a distance control module 20, a selection module 22 and a velocity control module 24. Each of the safety module 14, the distance control module 20 and the velocity control module 24 are connected with the detection module 12. The safety module 14 and the distance control module 20 are connected with the selection module 22. The safety module 14 comprises a nominal control unit 16, an emergency control unit 18 and an ICS control unit 17. Although not shown in Fig. 2, the ACC system 10 comprises a connection port, by which the ACC system 10, in particular the selection module 22 and the velocity control module 24, are connected with the vehicle trajectory control system 40 in order to provide control instructions to the vehicle trajectory control system 40. Each of the modules 12, 14, 20, 22, 24 and 40 and each of the control units 16, 17 and 18 can be corresponding modules of a software product that are executed by one or more processors, but they can also correspond to one or more independent processors. For example, each of the modules 12, 14, 20, 22, 24 and 40 and each of the control units 16, 17 and 18 can be an independent processor. In other examples, the modules 12, 14, 20, 22, 24 and the control units 16, 17 and 18 can correspond to one processor while the system 40 corresponds to another processor.

The detection module 12 comprises a system of radar sensor devices mounted at the front of the vehicle $V_0$ that are configured for detecting the preceding vehicle $V_1$ (and any other preceding vehicle driving ahead of the vehicle $V_0$) and for measuring, for each preceding vehicle, a corresponding distance with respect to the vehicle $V_0$, such as the distance $d_1$ in Fig. 1, and a corresponding velocity with respect to the vehicle, such as velocity $\upsilon_1$ in Fig. 1. The detection module 12 can detect and measure the distance and velocity of any preceding vehicle driving ahead of the vehicle $V_0$ within a detection range distance $d_{dr}$, which is the maximum distance from the vehicle $V_0$, at which a preceding vehicle can be detected by the detection module 12.

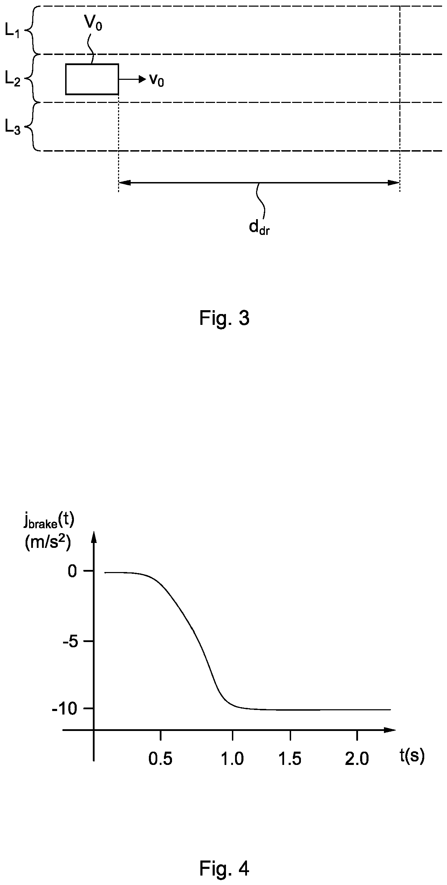

In the situation schematically shown in Fig. 3, the vehicle $V_0$ is driving on the middle lane $L_2$ of a three-lane road having three lanes $L_1$, $L_2$, and $L_3$, with no preceding vehicle driving ahead of the vehicle $V_0$ within the detection range distance $d_{dr}$. In this situation, no preceding vehicle is detected by the detection module 12 and the velocity control module 24 is activated by the detection module 12. The velocity control module 24 then determines a target velocity $\upsilon_{target}$ of the vehicle $V_0$, which is transmitted to the vehicle trajectory control system 40 being implemented as the velocity of the vehicle $V_0$.

The target velocity $\upsilon_{target}$ is configured for not exceeding a detection range velocity $\upsilon_{dr}$, which is the maximum velocity from which the vehicle $V_0$ can transition to a zero-velocity or rest state over the detection range distance $d_{dr}$ when driving with the maximal possible acceleration of the vehicle and according to a customisable predefined braking jerk profile $j_{brake}(t)$, i.e. according to:

$$a_0(t + \Delta t) = a_0(t) + \int_t^{t+\Delta t} j_{brake}(\tau)\, d\tau.$$

wherein $\Delta t$ is the iteration interval, which in the example under consideration is $\Delta t = 0{,}02\ s$.

Fig. 4 shows an exemplary braking jerk profile $j_{brake}(t)$. The braking jerk profile $j_{brake}(t)$ is a predefined function that is stored in a storage device (not shown) comprised in the ACC system to which the velocity control module 24 is connected. The predefined braking jerk profile $j_{brake}(t)$ is designed for providing a comfortable deceleration of the vehicle $V_0$.

The velocity control module 24 hence limits the velocity of the vehicle $V_0$ such that, if a standing preceding vehicle having a zero velocity were to appear suddenly within the detection range distance $d_{dr}$, the vehicle $V_0$, even if currently accelerating at the maximal possible acceleration, could brake according to the corresponding predefined braking jerk profile and come to a zero velocity state over the detection range distance $d_{dr}$ without colliding with such standing preceding vehicle. In the situation illustrated in Fig. 3, the safety module 14, the distance control module 20 and the selection module 22 can remain deactivated.

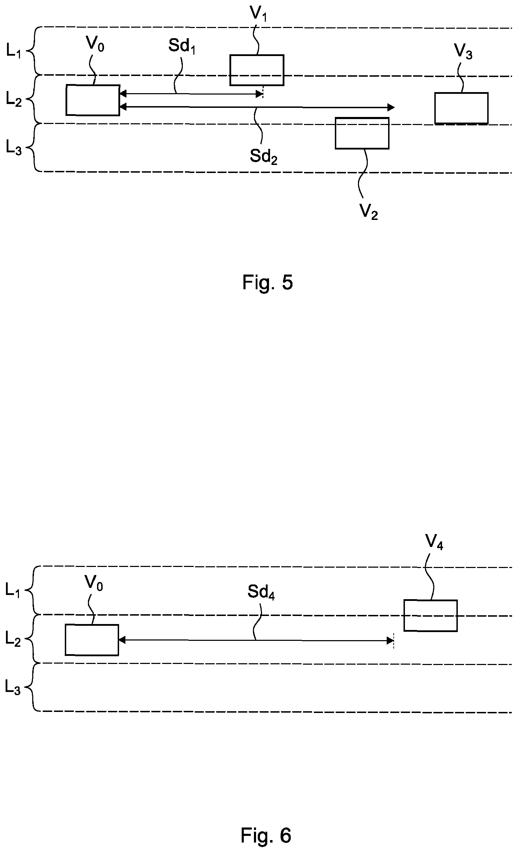

Fig. 5 schematically illustrates a further exemplary situation on the same three lane road shown in Fig. 3, but in which three preceding vehicles $V_1$, $V_2$, and $V_3$ are driving ahead of the vehicle $V_0$. The preceding vehicle $V_3$ is driving entirely within the same lane $L_2$ as the vehicle $V_0$. The preceding vehicle $V_1$ is moving laterally and changing lane from lane $L_2$ to lane $L_1$, i.e. exiting the lane L2, but still being partly within it. The preceding vehicle $V_2$ is moving laterally and changing lane from lane $L_3$ to lane $L_2$, i.e. entering the lane $L_2$, but still being partly within lane $L_3$. The detection module 12 is however configured for detecting not only the preceding vehicle $V_3$, but also each of the preceding vehicles $V_1$ and $V_2$ as preceding vehicles.

Fig. 6 schematically illustrates a further exemplary situation in which a preceding vehicle $V_4$ is driving ahead of the vehicle $V_0$, changing from the lane $L_1$ into the lane $L_2$, on which the vehicle $V_0$ is driving.

Fig. 5 and 6 illustrate different possible situations, which may coexist. In the following, it will be assumed for explanatory purposes that the situations illustrated in Fig. 5 and 6 coexist and all four preceding vehicles $V_1$, $V_2$, $V_3$ and $V_4$ are driving in front of the vehicle $V_0$ and are detected by the detection module 12.

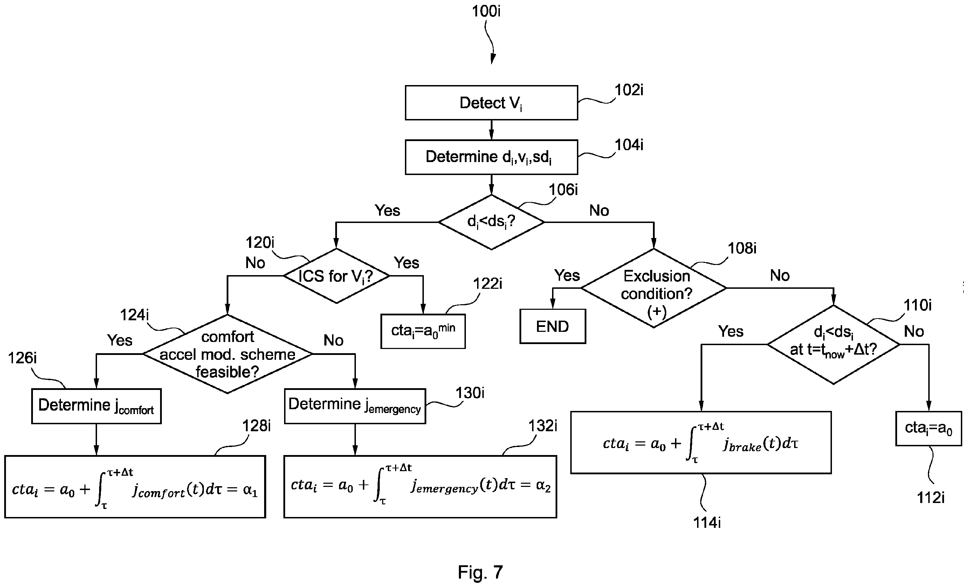

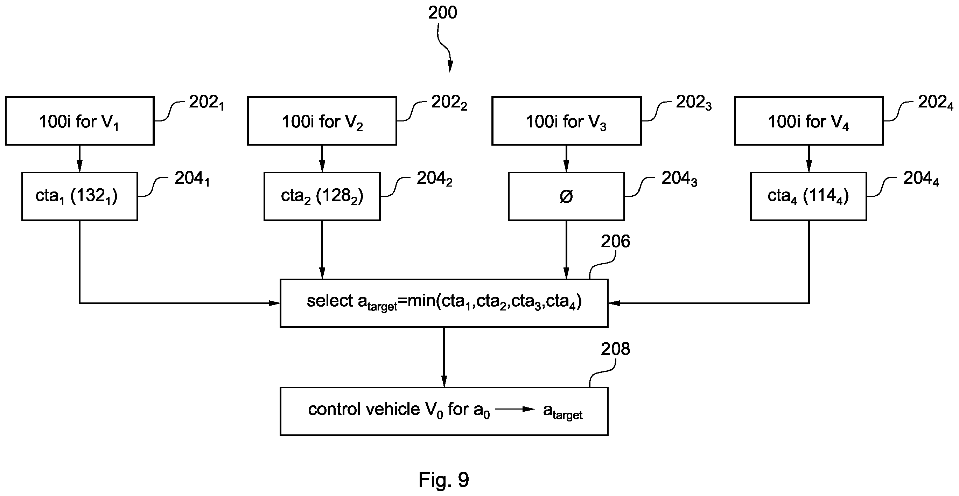

The ACC system 10 determines a target acceleration $a_{target}$ of the vehicle $V_0$ by determining, for each of the

preceding vehicles $V_1$, $V_2$, $V_3$ and $V_4$ a candidate target acceleration according to a method 200 that is schematically illustrated in Figs. 7 and 9.

For each of the preceding vehicles $V_1$, $V_2$, $V_3$ and $V_4$, the ACC system executes, at $202_i$, the method $100_i$ illustrated in Fig. 7, which starts by detecting, at $102_i$, each of the preceding vehicles $V_1$, $V_2$, $V_3$ and $V_4$ by the detection module 12, any by determining, at $104_i$, the corresponding distance and velocity $d_i$, $\upsilon_i$, namely $(d_1, \upsilon_1)$, $(d_2, \upsilon_2)$, $(d_3, \upsilon_3)$ and $(d_4, \upsilon_4)$, respectively, for example by direct measurement using the radar sensor devices of the detection module 12. Based on the corresponding distance and velocity $d_i$, $\upsilon_i$ determined for each preceding vehicle, the detection module 12 determines in each case the corresponding safety distance $sd_i$ as the distance from the vehicle $V_0$ over which the vehicle $V_0$ can stop according to the predefined braking jerk profile $j_{brake}(t)$ without a collision with the corresponding preceding vehicle $V_i$ in case of a full braking of the corresponding preceding vehicle $V_i$ from a state of maximal acceleration of the vehicle $V_0$.

In the situation shown in Fig. 5 and 6, the preceding vehicles $V_1$ and $V_2$ are at a distance $d_1$, $d_2$ from the vehicle $V_0$ smaller than a respective safety distance $sd_1$ and $sd_2$, respectively, while the preceding vehicles $V_3$ and $V_4$ are at a respective distance $d_3$, $d_4$ from the vehicle $V_0$ greater than the corresponding safety distance $sd_3$ and $sd_4$.

At $106_i$, the detection module 12 compares, for each preceding vehicle $V_i$, the computed safety distance $sd_i$ to the respective determined distance $d_i$ and, based thereon, activates the safety module 14 or the distance control module 20 for determining a corresponding candidate target acceleration $cta_i$.

If the outcome of $106_i$ reveals that the determined distance $d_i$ is greater than or equal to the corresponding safety distance $sd_i$, as is the case for the preceding vehicles $V_3$ and $V_4$, the method $100_i$ proceeds to $108_i$, where it is checked whether any of the preceding vehicles $V_3$ and $V_4$ fulfils an exclusion condition.

The exclusion condition is fulfilled for a preceding vehicle $V_i$ if

- there exists another preceding vehicle $V_j$ for which the determined distance $d_j$ and the determined velocity $\upsilon_j$ are respectively smaller than the distance and velocity determined for said given preceding vehicle ($d_j < d_i$, $\upsilon_j < \upsilon_i$); and/or

- a difference between the distance determined for said given preceding vehicle $d_i$ and a stopping distance $d_{stop}$ of the vehicle $V_0$ is equal to or greater than zero or a security margin, wherein the stopping distance $d_{stop}$ of the vehicle corresponds to a distance covered by the vehicle $V_0$ until the vehicle comes to a zero-velocity state when decelerating according to the predefined braking jerk profile.

In the situation shown in Fig. 5 and 6, if for example the preceding vehicle $V_3$ is further away from the vehicle $V_0$ and moving faster than the preceding vehicles $V_4$, the preceding vehicle $V_3$ fulfils the first condition and hence the exclusion condition too. Therefore, the method $100_3$ (i.e. the method $100_i$ when carried out for determining the candidate target acceleration for the preceding vehicle $V_3$) ends after $108_3$ and returns no candidate target acceleration (cf. "END" in Fig. 7).

For a preceding vehicle not fulfilling the exclusion condition, for example for the preceding vehicle $V_4$, the method continues to $110_i$ with the activation of the distance control module 20 for determining the candidate target acceleration $cta_i$.

At $110_i$, the distance control module 20 solves the equation of motion of the vehicle $V_0$ and the preceding vehicle $V_4$ taking into account the velocity and acceleration of the vehicle $V_0$, the determined velocity $\upsilon_4$ of the preceding vehicle $V_4$ and the determined distance $d_4$ between the vehicle $V_0$ and the preceding vehicle $V_4$ and determines whether the respective safety distance $sd_4$ will be violated during the next iteration, i.e. during the coming predefined time interval $\Delta t$ from a current time $t_{now}$ assuming that the velocities of the vehicle $V_0$ and the preceding vehicle $V_4$ remain unchanged. If this is the case, the candidate target acceleration $cta_4$ is determined, at 114i, according to the predefined braking jerk profile $j_{brake}(t)$ shown in Fig. 4. Otherwise, $cta_4$ is determined, at $112_i$, to correspond to the current acceleration $a_0$ of the vehicle, such that the trajectory of the vehicle $V_0$ is left unaffected.

If the outcome of $106_i$ reveals that the determined distance $d_i$ is smaller than the corresponding safety distance $sd_i$, as is the case for the preceding vehicles $V_1$ and $V_2$, the safety module 14 is activated for determining the corresponding candidate target accelerations. The method $100_i$ proceeds to $120_i$, wherein the ICS control unit 17 determines whether the vehicle $V_0$ is in an ICS with respect to the corresponding preceding vehicle $V_i$, assuming that the corresponding preceding vehicle $V_i$ is decelerating with a predetermined safety acceleration $a_{safe}$, for example a predetermined safety acceleration $a_{safe} = -3$ ms$^{-2}$. If the result of this test is positive, the corresponding candidate target acceleration $cta_i$ is determined to correspond to the minimal possible acceleration $a_0^{min}$ of the vehicle $V_0$, i.e. the candidate target acceleration is chosen to correspond to the vehicle $V_0$ initiating a full braking manoeuvre.

If the result of the test at $120_i$ is negative, meaning that the corresponding preceding vehicle $V_i$ is not in an ICS situation, the nominal control unit 16 determines, at $124_i$, by solving the equations of motion of the vehicle $V_0$ and the corresponding preceding vehicle $V_i$ (e.g. $V_1$ or $V_2$ in this case), whether it is feasible to establish the corresponding safety distance $sd_i$ by modifying the acceleration $a_0$ of the vehicle $V_0$ according to a comfort acceleration modification scheme, e.g. within a predefined time limit $t_c$ and without the jerk $j_0 = da_0/dt$ of the vehicle $V_0$ falling below a predefined jerk lower limit $j_{lim}$, and assuming that the corresponding preceding vehicle V; moves at a constant velocity corresponding to the determined respective velocity $v_i$. In other configurations, the acceleration modification scheme may additionally or alternatively impose the condition that the acceleration $a_0$ of the vehicle $V_0$ should not fall below a predefined acceleration lower limit, for example $a_{min} = - 5$ ms$^{-2}$. In the example under consideration, the predefined time is $t_c = 2$ s and the predefined jerk lower limit is $j_{lim} = -10$ ms$^{-3}$.

If the nominal control unit 16 determines at $124_i$ that it is feasible to establish the corresponding safety distance $sd_i$ by modifying the acceleration $a_0$ of the vehicle $V_0$ according to a comfort acceleration modification scheme, i.e. if the result of the test at $124_i$ is positive, the nominal control unit 16 determines, at $126_i$, a comfort jerk profile $j_{comfort}(t)$ configured for modifying the acceleration $a_0$ of the vehicle $V_0$ according to the comfort acceleration modification scheme with the minimal possible jerk and taking into account the corresponding distance $d_i$ and velocity $v_i$ determined for the corresponding preceding vehicle $V_i$.

The comfort jerk profile $j_{comfort}(t)$ is determined by determining solutions to the equations of motion of the vehicle $V_0$ and the corresponding preceding vehicle V; imposing the aforesaid boundary conditions defined by the comfort acceleration modification scheme and choosing, among all possible solutions, the solution $j(t)$ for which the minimal value of the jerk of the vehicle $j_{comfort}^{min}$ is maximal, i.e. for which $j_{comfort}^{min}$ closest to zero, in order to maximise comfort.

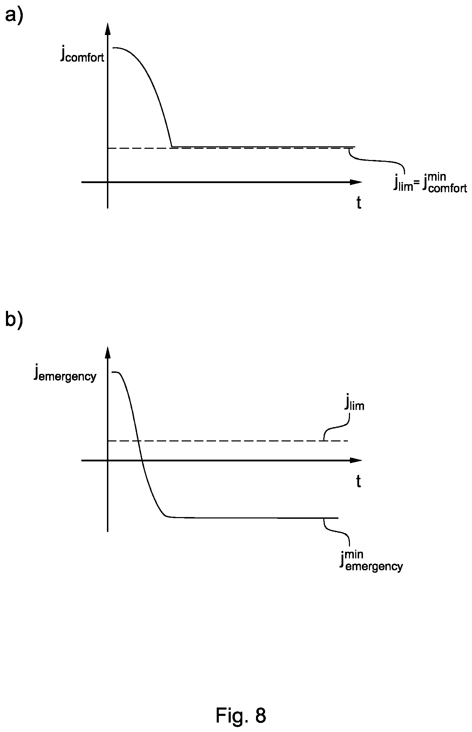

An exemplary comfort jerk profile $j_{comfort}(t)$ is schematically illustrated in Fig. 8a. As seen in Fig. 8a, the jerk according to the comfort jerk profile $j_{comfort}(t)$ does not fall below the predefined jerk lower limit $j_{lim}$.

After determining the comfort jerk profile $j_{comfort}(t)$ for the preceding vehicle $V_i$, the nominal control unit 16 then sets, at $128_i$, the corresponding candidate target acceleration $cta_i$ to a first acceleration value $\alpha_1$ determined according to the comfort jerk profile $j_{comfort}(t)$, i.e. according to:

$$cta_i = \alpha_1 = a_0(\tau = 0) + \int_{\tau}^{\tau+\Delta t} j_{comfort}(\tau)\, d\tau.$$

Otherwise, if the result of the test at $124_i$ is negative, the emergency control unit 18 is activated to determine, at $130_i$, an emergency jerk profile $j_{emergency}(t)$ configured for modifying the acceleration $a_0$ of the vehicle $V_0$ according to an emergency modification scheme, i.e. within the predefined time $t_c$ and such that the acceleration of the vehicle $a_0$ does not fall below a predefined acceleration lower limit $a_{min} = -10$ ms$^{-2}$, but without the jerk of the vehicle being bound by $j_{lim}$.

The emergency jerk profile $j_{emergency}(t)$ is determined by determining solutions to the equations of motion of the vehicle $V_0$ and the corresponding preceding vehicle V; imposing the aforesaid boundary conditions defined by the emergency acceleration modification scheme and choosing, among all possible solutions, the solution $j(t)$ for which the minimal value of the jerk of the vehicle $j_{emergency}^{min}$ is maximal, i.e. for which $j_{emergency}^{min}$ is closest to zero, in order to maximise comfort.

An exemplary emergency jerk profile $j_{emergency}(t)$ is schematically illustrated in Fig. 8b. As seen in Fig. 8b, the jerk according to the emergency jerk profile $j_{emergency}(t)$ does fall below the predefined jerk lower limit $j_{lim}$, unlike the comfort jerk profile $j_{comfort}(t)$. The minimal jerk value of the comfort jerk profile $j_{comfort}^{min}$ is greater than a minimal jerk value of the emergency jerk profile $j_{emergency}^{min}$ (cf. Fig. 8a). Thus, the acceleration of the vehicle $V_0$ can be more rapidly reduced according to the emergency jerk *profile* $j_{emergency}(t)$ than according to the comfort jerk profile $j_{comfort}(t)$ but causing to the occupants a lower degree of comfort.

After determining the emergency jerk profile $j_{emergency}(t)$ for the preceding vehicle $V_i$ at $130_i$, the emergency control unit 18 sets, at $132_i$, the corresponding candidate target acceleration $cta_1$ or $cta_2$ to a second acceleration value $a_2$ determined according to the emergency jerk profile $j_{emergency}(t)$, i.e. according to:

$$cta_i = \alpha_2 = a_0(\tau = 0) + \int_{\tau}^{\tau+\Delta t} j_{emergency}(\tau)\, d\tau.$$

Fig. 9 schematically illustrates how the target acceleration $a_{target}$ is determined by the ACC system 10 by determining for each of the preceding vehicles $V_1$, $V_2$, $V_3$ and $V_4$ corresponding candidate target acceleration is. The method $100_i$ is carried out, sequentially or in parallel, for each of the preceding vehicles $V_1$, $V_2$, $V_3$ and $V_4$ at $202_1$ to $202_4$, respectively.

For each of the preceding vehicles $V_1$, $V_2$, $V_3$ and $V_4$, the corresponding method $100_i$ produces, as an output, a corresponding candidate target acceleration cta;, depending on the relative situation of that particular preceding vehicle $V_i$ with respect to the vehicle $V_0$.

In the exemplary situation illustrated in Fig. 5, no ICS is determined for either of the preceding vehicles $V_1$ or

$V_2$. For the preceding vehicle $V_1$, the nominal control unit 16 determines at $124_1$, according to the equations of motion of the vehicle $V_0$ and the preceding vehicle $V_1$, that it is not feasible to establish the safety distance $sd_1$ within the predetermined time $t_c$ by modifying the acceleration $a_0$ of the vehicle $V_0$ without the jerk of the vehicle falling below the predefined jerk lower limit is $j_{lim}$. Therefore, the candidate target acceleration $cta_1$ is determined by the emergency control unit 18 at $132_1$ as the outcome of the method $100_1$ to correspond to

$$cta_1 = \alpha_2 = a_0(\tau = 0) + \int_{\tau}^{\tau + \Delta t} j_{emergency}(\tau)\, d\tau.$$

This corresponds to the value $\alpha_2$, which is smaller than the value $\alpha_1$ that would have been determined for the preceding vehicle $V_1$ if the result of the test at $124_1$ had been positive.

For the preceding vehicle $V_2$, the nominal control unit 16 determines at $124_2$, according to the equations of motion of the vehicle $V_0$ and the preceding vehicle $V_2$, that it is feasible to establish the safety distance $sd_2$ within the predetermined time $t_c$ without the jerk of the vehicle falling below the predefined jerk lower limit is $j_{lim}$ by modifying the acceleration $a_0$ of the vehicle $V_0$ according to the comfort jerk profile $j_{comfort}(t)$ determined at $126_2$ for the preceding vehicle $V_2$. Therefore, the candidate target acceleration $cta_2$ is determined by the nominal control unit 16 at $128_2$ as the outcome of the method $100_2$ to correspond to

$$cta_2 = a_0(\tau = 0) + \int_{\tau}^{\tau + \Delta t} j_{comfort}(\tau)\, d\tau.$$

For the preceding vehicle $V_3$, the exclusion condition check at $108_3$ is positive, for which no candidate target acceleration is determined (cf. $204_3$ in Fig. 9).

For the preceding vehicle $V_4$, the distance control module 20 determines at $110_4$ that the corresponding safety distance $sd_4$ would be violated in the course of the current predefined time interval $\Delta t$, for which, in order to avoid that, the candidate target acceleration $cta_4$ is determined by the distance control module 20 at $114_4$ as the outcome of the method $100_4$ to correspond to

$$cta_4 = a_0(\tau = 0) + \int_{\tau}^{\tau + \Delta t} j_{brake}(\tau)\, d\tau.$$

The outcomes of the methods $100_i$ carried out for each of the preceding vehicles $V_1$, $V_2$, $V_3$ and $V_4$ are determined (cf. $204_1$, $204_2$, $204_3$, $204_4$ in Fig. 9) and transmitted to the selection module 22 at 206, which selects as the target acceleration $a_{target}$ the minimal candidate target acceleration, i.e. the smallest of values of $cta_1$, $cta_2$ and $cta_4$ $\min(cta_1, cta_2, cta_4)$.

In the example under consideration, assuming for example $cta_1 < cta_2 < cta_4$, the selection module 22 selects, at 206, $cta_1$ as the target acceleration $a_{target}$.

The ACC system 10 then transmits, at 208, the value $a_{target} = cta_1$ to the vehicle trajectory control system 40 for being implemented as the new acceleration of the vehicle $V_0$ before returning to steps $202_i$ to restart the iteration loop. As a consequence, the vehicle reacts to the current traffic situation with respect to the preceding vehicles $V_1$, $V_2$, $V_3$ and $V_4$ with the best possible balance between safety and comfort.

Notably, if an ICS had been determined by the ICS control unit 17 for any of the preceding vehicles $V_1$, $V_2$, $V_3$ and $V_4$ at the corresponding $120_i$, the respective cta; would have corresponded to the minimal possible acceleration of the vehicle $a_0{}^{min}$, for which the outcome of the selection at 206 would have delivered $a_0{}^{min}$ as an output and the vehicle trajectory control system 40 would have initiated at 208 a full braking manoeuvre of the vehicle $V_0$.

## Claims

1.    An adaptive cruise control (ACC) system for a vehicle ($V_0$) comprising:

   a detection module (12) configured for detecting one or more preceding vehicles ($V_1$, ..., $V_n$) driving ahead of the vehicle ($V_0$) and for determining a respective velocity ($v_1$, ..., $v_n$) and a respective distance ($d_1$, ..., $d_n$) of each of the detected preceding vehicles with respect to the vehicle ($V_0$); wherein the detection module (12) is further configured for determining whether each of the determined distances is smaller than a respective safety distance; and

a safety module (14) connected to the detection module (12), wherein the safety module (14) is configured for determining, for each preceding vehicle of at least a part of the one or more detected preceding vehicles for which the determined distance ($d_1$, ..., $d_n$) is smaller than the respective safety distance ($sd_1$, ..., $sd_n$), a respective candidate target acceleration ($cta_1$, ..., $cta_n$) of the vehicle ($V_0$), **characterised in that** the safety module (14) comprises:

an ICS control unit (17) configured for determining whether the vehicle ($V_0$) is or will be in an inevitable collision state with respect to the corresponding preceding vehicle ($V_i$), wherein the inevitable collision state corresponds to a state of the vehicle ($V_0$) in which a collision with the corresponding preceding vehicle ($V_i$) is inevitable regardless of a modification of an acceleration of the vehicle ($V_0$); wherein the ICS control unit (17) is further configured for determining the respective candidate target acceleration ($cta_i$) corresponding to a minimal possible acceleration ($a_0^{min}$) of the vehicle if the ICS control unit (17) determines that the vehicle is in an inevitable collision state; and

an emergency control unit (18) configured for determining the candidate target acceleration ($cta_i$), if the ICS control unit (17) determines that the vehicle is not in an inevitable collision state with respect to the corresponding preceding vehicle ($V_i$), according to an emergency acceleration modification scheme, wherein the emergency acceleration modification scheme is defined for achieving the respective safety distance ($sd_i$) within a predefined time ($t_c$) and/or without the acceleration of the vehicle falling below a first predefined acceleration lower limit.

2. The ACC system of claim 1, wherein the safety module (14) further comprises:

a nominal control unit (16) configured for determining, if the ICS control unit (17) determines that the vehicle is not in an inevitable collision state with respect to the corresponding preceding vehicle ($V_i$), whether the respective safety distance ($sd_i$) can be achieved by modifying the acceleration of the vehicle ($a_0$) according to a comfort acceleration modification scheme, wherein the comfort acceleration modification scheme is defined for achieving the respective safety distance ($sd_i$) within the predefined time ($t_c$) and without a time derivative of the acceleration of the vehicle falling below a predefined acceleration derivative lower limit and/or without an acceleration of the vehicle falling below a second predefined acceleration lower limit, wherein the comfort acceleration modification scheme is different from the emergency acceleration modification scheme, wherein the nominal control unit (16) is further configured for determining the respective candidate target acceleration ($cta_i$) according to the comfort acceleration modification scheme if the nominal control unit (16) determines that the respective safety distance ($sd_i$) can be achieved by modifying the acceleration of the vehicle according to the comfort acceleration modification scheme; and

wherein the emergency control unit (18) is further configured for determining the candidate target acceleration ($cta_i$) according to the emergency acceleration modification scheme if the nominal control unit (16) determines that the respective safety distance ($sd_i$) cannot be achieved by modifying the acceleration of the vehicle according to the comfort acceleration modification scheme and the ICS control unit (17) determines that the vehicle is not in an inevitable collision state with respect to the corresponding preceding vehicle ($V_i$);

wherein the nominal control unit (16) is preferably configured for determining whether the respective safety distance ($sd_i$) can be achieved according to the comfort acceleration modification scheme assuming that the corresponding preceding vehicle ($V_i$) moves at a constant velocity corresponding to the determined respective velocity ($v_i$).

3. The ACC system of any of the preceding claims, wherein the emergency control unit (18) is further configured for determining, based on the respective distance ($d_i$) and the respective velocity ($v_i$):

- an emergency jerk profile ($j_{emergency}(t)$) defining a time evolution of the time derivative of the acceleration of the vehicle allowing to achieve the respective safety distance ($sd_i$) within the predefined time ($t_c$) and/or without the acceleration of the vehicle falling below the first predefined acceleration lower limit; and/or

- an emergency acceleration profile ($a_{emergency}(t)$) defining a time evolution of the acceleration of the vehicle allowing to achieve the respective safety distance ($sd_i$) within the predefined time ($t_c$) and/or without the acceleration of the vehicle falling below the first predefined acceleration lower limit; and

wherein the emergency control unit (18) is configured for determining the respective candidate target acceleration ($cta_i$) according to the emergency jerk profile ($j_{emergency}(t)$) and/or to the emergency acceleration profile ($a_{emergency}(t)$).

4. The ACC system of any of claims 2 or 3, wherein the nominal control unit (16) is further configured for, if the nominal control unit (16) determines that the respective safety distance ($sd_i$) can be achieved by modifying the acceleration of the vehicle according to the comfort acceleration modification scheme, determining, based on the respective distance ($d_i$) and the respective velocity ($v_i$) determined for the corresponding preceding vehicle ($V_i$):

- a comfort jerk profile ($j_{comfort}(t)$) defining a time evolution of the time derivative of the acceleration of the vehicle allowing to achieve the respective safety distance ($sd_i$) within the predefined time ($t_c$) without a time derivative of the acceleration of the vehicle falling below the predefined acceleration derivative lower limit and/or without the acceleration of the vehicle falling below the second acceleration lower limit; and/or
- a comfort acceleration profile ($a_{comfort}(t)$) defining a time evolution of the acceleration of the vehicle allowing to achieve the respective safety distance ($sd_i$) within the predefined time ($t_c$) without a time derivative of the acceleration of the vehicle falling below the predefined acceleration derivative lower limit and/or without the acceleration of the vehicle falling below the second acceleration lower limit; and

wherein the nominal control unit (16) is configured for determining the respective candidate target acceleration ($cta_i$) according to the comfort jerk profile ($j_{comfort}(t)$) and/or the comfort acceleration profile ($a_{comfort}(t)$).

5. The ACC system of claims 3 and 4, wherein the emergency control unit (18) is configured for determining said emergency jerk profile ($j_{emergency}(t)$) and/or said emergency acceleration profile ($a_{emergency}(t)$) if the nominal control unit (16) determines that the respective safety distance ($sd_i$) cannot be achieved by modifying the acceleration of the vehicle according to the comfort acceleration modification scheme and/or if the ICS control unit (17) determines that the vehicle is not in an inevitable collision state with respect to the corresponding preceding vehicle ($V_i$).

6. The ACC system of any of claims 2 to 5, wherein determining the respective candidate target acceleration ($cta_i$) according to the comfort acceleration modification scheme by the nominal control unit (16) comprises determining the respective candidate acceleration ($cta_i$) as a first acceleration value ($a_1$); and

wherein determining the respective candidate target acceleration ($cta_i$) according to the emergency acceleration modification scheme by the emergency control unit (18) comprises determining the respective candidate acceleration ($cta_i$) as a second acceleration value ($a_2$);
wherein the first acceleration value ($a_1$) is greater than the second acceleration value ($a_2$); and/or
wherein a minimal value of the acceleration of the vehicle or the time derivative thereof according to the comfort acceleration modification scheme is greater than a minimal value of the acceleration of the vehicle or the time derivative thereof according to the emergency acceleration modification scheme.

7. The ACC system of any of the preceding claims, further comprising a distance control module (20) connected with the detection module (12) and configured for, for each of at least a part of the one or more preceding vehicles ($V_1$, ..., $V_n$) for which the determined respective distance ($d_1$, ..., $d_n$) equals or exceeds the respective safety distance ($sd_1$, ..., $sd_n$), determining whether the vehicle ($V_0$) is in a potential collision state with respect to the corresponding preceding vehicle ($V_i$), wherein the potential collision state corresponds to a state of the vehicle ($V_0$) in which if the corresponding preceding vehicle ($V_i$) initiates a full braking manoeuvre, a distance between the vehicle and the corresponding preceding vehicle will become smaller than the respective safety distance ($sd_i$) within a predefined time interval ($\Delta t$) unless the acceleration of the vehicle is modified;
wherein, if the distance control module (20) determines that the vehicle ($V_0$) is in a potential collision state with respect to the corresponding preceding vehicle ($V_i$), the distance control module (20) is further configured for:
determining the corresponding candidate target acceleration ($cta_i$) according to a predetermined distance control acceleration modification scheme.

8. The ACC system of any of the preceding claims, wherein said at least a part of the one or more detected preceding vehicles ($V_1$, ..., $V_n$) for which the determined distance ($d_1$, ..., $d_n$) is smaller than the respective safety distance ($sd_1$, ..., $sd_n$) and/or said at least a part of the one or more preceding vehicles ($V_1$, ..., $V_n$) for which the determined distance ($d_1$, ..., $d_n$) equals or exceeds the respective safety distance ($sd_1$, ..., $sd_n$) comprises preceding vehicles for which an exclusion condition is not fulfilled, wherein the exclusion condition is fulfilled for a given preceding vehicle ($V_i$) if

- another preceding vehicle ($V_j$) exists for which the determined distance ($d_j$) and the determined velocity ($v_j$) are respectively smaller than the distance ($d_i$) and velocity ($v_i$) determined for said given preceding vehicle ($V_i$); and/or

- a difference between the distance determined for said given preceding vehicle ($d_i$) and a stopping distance ($d_{stop}$) of the vehicle ($V_0$) is equal to or greater than zero or a security margin, wherein the stopping distance ($d_{stop}$) of the vehicle ($V_0$) corresponds to a minimal distance covered by the vehicle until the vehicle comes to a zero-velocity state, in particular according to a predefined braking acceleration modification scheme; and/or

further comprising a selection module (22) configured for selecting, among all candidate target accelerations ($cta_1$, ..., $cta_n$) determined by the safety module (14) or the distance control module (20), a minimal candidate target acceleration ($cta_{min}$), wherein the minimal candidate target acceleration is smaller than all other candidate target accelerations.

9.  A vehicle ($V_0$) comprising:

    a vehicle trajectory control system (40) configured for controlling an acceleration and/or a velocity of the vehicle ($V_0$); and
    an adaptive cruise control (ACC) system (10) according to any of the preceding claims,
    wherein the vehicle trajectory control system (40) is configured for controlling the acceleration and/or the velocity of the vehicle ($V_0$) according to a target velocity ($v_{target}$) and/or to a candidate target acceleration ($cta_i$) determined by the ACC system (10), preferably according to a minimal candidate target acceleration ($cta_{min}$) selected among a plurality of candidate target accelerations ($cta_1$, ..., $cta_n$) determined for a corresponding plurality of detected preceding vehicles.

10. A method (200) of determining a target acceleration ($a_{target}$) of a vehicle ($V_0$), the method comprising:

    detecting ($102_i$) one or more preceding vehicles ($V_1$, ..., $V_n$) driving ahead of the vehicle ($V_0$);
    determining ($104_i$) a velocity ($v_1$, ..., $v_n$) and a distance ($d_1$, ..., $d_n$) of each of the one or more detected preceding vehicles ($V_1$, ..., $V_n$) with respect to the vehicle ($V_0$); and
    determining the target acceleration ($a_{target}$) by determining ($204_i$), for each preceding vehicle of at least a part of the one or more detected preceding vehicles ($V_1$, ..., $V_n$), a respective candidate target acceleration ($cta_i$) of the vehicle ($V_0$), and by selecting (206) as the target acceleration ($a_{target}$) the minimal candidate target acceleration ($cta_{min}$), **characterised in that** determining the corresponding candidate target acceleration ($cta_i$) for a corresponding preceding vehicle ($V_i$) comprises in each case:
    determining ($106_i$) whether the corresponding determined distance ($d_i$) is smaller than a respective safety distance ($sd_i$), and, if the corresponding determined distance ($d_i$) is smaller than the respective safety distance ($sd_i$):
    determining ($120_i$) whether the vehicle ($V_0$) is or will be in an inevitable collision state with respect to the corresponding preceding vehicle ($V_i$), wherein the inevitable collision state corresponds to a state of the vehicle ($V_0$) in which a collision with the corresponding preceding vehicle ($V_i$) is inevitable regardless of a modification of the acceleration of the vehicle ($V_0$), and if the vehicle ($V_0$) is in an inevitable collision state with respect to the corresponding preceding vehicle ($V_i$), determining the corresponding candidate target acceleration ($cta_i$) as a minimal possible acceleration ($a_0^{min}$) of the vehicle; and if the vehicle ($V_0$) is not in an inevitable collision state with respect to the corresponding preceding vehicle ($V_i$), determining ($132_i$) the corresponding candidate target acceleration ($cta_i$) according to an emergency acceleration modification scheme, wherein the emergency acceleration modification scheme is defined for achieving the respective safety distance ($sd_i$) within a predefined time ($t_c$) and/or without the acceleration of the vehicle falling below a first predefined acceleration lower limit.

11. The method of claim 10, wherein if the corresponding determined distance ($d_i$) is smaller than the respective safety distance ($sd_i$) and the vehicle ($V_0$) is not in an inevitable collision state with respect to the corresponding preceding vehicle ($V_i$), determining the corresponding candidate target acceleration ($cta_i$) for a corresponding preceding vehicle ($V_i$) further comprises:

    determining ($124_i$) whether it is feasible to achieve the respective safety distance ($sd_i$) by modifying the acceleration of the vehicle ($V_0$) according to a comfort acceleration modification scheme, wherein the comfort acceleration modification scheme is defined for achieving the respective safety distance ($sd_i$) within a predefined time ($t_c$) and/or without a time derivative of the acceleration of the vehicle falling below a predefined acceleration derivative lower limit ($j_{lim}$) and/or without an acceleration of the vehicle falling below a second predefined acceleration lower limit, and
    if it is feasible to achieve the respective safety distance ($sd_i$) according to the comfort acceleration modification scheme, determining ($128_i$) the corresponding candidate target acceleration ($cta_i$) according to the comfort acceleration modification scheme; and wherein the corresponding candidate target acceleration ($cta_i$) is deter-

mined according to the emergency acceleration modification scheme if the vehicle ($V_0$) is not in an inevitable collision state with respect to the corresponding preceding vehicle ($V_i$) and it is not feasible to achieve the respective safety distance ($sd_i$) according to the comfort acceleration modification scheme, wherein determining ($124_i$) whether it is feasible to achieve the respective safety distance ($sd_i$) by modifying the acceleration of the vehicle according to the comfort acceleration modification scheme preferably comprises assuming that the corresponding preceding vehicle ($V_i$) moves at a constant velocity, corresponding to the determined respective velocity ($v_i$).

12. The method of any of claims 10 or 11, wherein determining the corresponding candidate target acceleration ($cta_i$) according to the emergency acceleration modification scheme comprises determining ($130_i$), based on the respective distance ($d_i$) and the respective velocity ($v_i$) determined for the corresponding preceding vehicle ($V_i$)

- an emergency jerk profile ($j_{emergency}(t)$) defining a time evolution of the time derivative of the acceleration of the vehicle allowing to achieve the respective safety distance ($sd_i$) within the predefined time ($t_c$) and/or without the acceleration of the vehicle falling below the first predefined acceleration lower limit; and/or
- an emergency acceleration profile ($a_{emergency}(t)$) defining a time evolution of the acceleration of the vehicle allowing to achieve the respective safety distance ($sd_i$) within the predefined time ($t_c$) and/or without the acceleration of the vehicle falling below the first predefined acceleration lower limit; and

wherein the respective candidate target acceleration ($cta_i$) for the corresponding preceding vehicle ($V_i$) is determined according to the emergency jerk profile ($j_{emergency}(t)$) and/or to the emergency acceleration profile ($a_{emergency}(t)$).

13. The method of any of claims 11 or 12, wherein determining the corresponding candidate target acceleration ($cta_i$) according to the comfort acceleration modification scheme comprises determining ($126_i$), based on the respective distance ($d_i$) and the respective velocity ($v_i$) determined for the corresponding preceding vehicle ($V_i$):

- a comfort jerk profile ($j_{comfort}(t)$) defining a time evolution of the time derivative of the acceleration of the vehicle allowing to achieve the respective safety distance ($sd_i$) within the predefined time ($t_c$) without a time derivative of the acceleration of the vehicle falling below the predefined acceleration derivative lower limit and/or without the acceleration of the vehicle falling below the second acceleration lower limit; and/or
- a comfort acceleration profile ($a_{comfort}(t)$) defining a time evolution of the acceleration of the vehicle allowing to achieve the respective safety distance ($sd_i$) within the predefined time ($t_c$) without a time derivative of the acceleration of the vehicle falling below the predefined acceleration derivative lower limit and/or without the acceleration of the vehicle falling below the second acceleration lower limit; and

wherein the respective candidate target acceleration ($cta_i$) for the corresponding preceding vehicle ($V_i$) is determined according to the comfort jerk profile ($j_{comfort}(t)$) and/or the comfort acceleration profile ($a_{comfort}(t)$).

14. The method of claims 12 and 13, wherein said emergency jerk profile ($j_{emergency}(t)$) and/or said emergency acceleration profile ($a_{emergency}(t)$) is determined if the respective safety distance ($sd_i$) cannot be achieved by modifying the acceleration of the vehicle according to the comfort acceleration modification scheme and/or if the vehicle ($V_0$) is not in an inevitable collision state with respect to the corresponding preceding vehicle ($V_i$).

15. The method of any of claims 11 to 14, wherein determining the corresponding candidate target acceleration ($cta_i$) of a corresponding preceding vehicle ($V_i$) further comprises, if the corresponding determined distance ($d_i$) equals or exceeds the respective safety distance ($sd_i$), determining ($110_i$) whether the vehicle ($V_0$) is in a potential collision state with respect to the corresponding preceding vehicle ($V_i$), wherein the potential collision state corresponds to a state of the vehicle ($V_0$) in which if the corresponding preceding vehicle ($V_i$) initiates a full braking manoeuvre a distance between the vehicle ($V_0$) and the corresponding preceding vehicle ($V_i$) will become smaller than the respective safety distance ($sd_i$) within a predefined time interval ($\Delta t$) unless the acceleration of the vehicle ($V_0$) is modified; and
if the vehicle ($V_0$) is in a potential collision state with respect to the corresponding preceding vehicle ($V_i$), determining ($114_i$) the corresponding candidate target acceleration ($cta_i$) according to a predetermined distance control acceleration modification scheme.

**Patentansprüche**

1.  Adaptives Geschwindigkeitsregelungssystem (ACC) für ein Fahrzeug (V0), das Folgendes umfasst:

    ein Detektionsmodul (12), das zum Detektieren eines oder mehrerer vorausfahrender Fahrzeuge ($V_1$, ..., $V_n$), die vor dem Fahrzeug ($V_0$) fahren, und zum Bestimmen einer jeweiligen Geschwindigkeit ($v_1$, ..., $v_n$) und eines jeweiligen Abstands ($d_1$, ..., $d_n$) jedes der detektierten vorausfahrenden Fahrzeuge in Bezug auf das Fahrzeug ($V_0$) konfiguriert ist; wobei das Detektionsmodul (12) ferner dazu konfiguriert ist, zu bestimmen, ob jeder der best immten Abstände kleiner als ein jeweiliger Sicherheitsabstand ist; und

    ein Sicherheitsmodul (14), das mit dem Detektionsmodul (12) verbunden ist, wobei das Sicherheitsmodul (14) dazu konfiguriert ist, für jedes vorausfahrende Fahrzeug von mindestens einem Teil des einen oder der mehreren detektierten vorausfahrenden Fahrzeuge, für die der bestimmte Abstand ($d_1$, ..., $d_n$) kleiner als der jeweilige Sicherheitsabstand ($sd_1$, ..., $sd_n$) ist, eine jeweilige Kandidatenzielbeschleunigung ($cta_1$, ..., $cta_n$) des Fahrzeugs ($V_0$) zu bestimmen, **dadurch gekennzeichnet, dass** das Sicherheitsmodul (14) Folgendes umfasst:

    eine ICS-Steuereinheit (17), die dazu konfiguriert ist, zu bestimmen, ob sich das Fahrzeug ($V_0$) in einem unvermeidlichen Kollisionszustand in Bezug auf das entsprechende vorausfahrende Fahrzeug ($V_i$) befindet oder befinden wird, wobei der unvermeidliche Kollisionszustand einem Zustand des Fahrzeugs ($V_0$) entspricht, in dem eine Kollision mit dem entsprechenden vorausfahrenden Fahrzeug ($V_i$) ungeachtet einer Modifikation einer Beschleunigung des Fahrzeugs ($V_0$) unvermeidlich ist; wobei die ICS-Steuereinheit (17) ferner dazu konfiguriert ist, die jeweilige Kandidatenzielbeschleunigung ($cta_i$) zu bestimmen, die einer minimal möglichen Beschleunigung ($a0_{min}$) des Fahrzeugs entspricht, wenn die ICS-Steuereinheit (17) bestimmt, dass sich das Fahrzeug in einem unvermeidlichen Kollisionszustand befindet; und

    eine Notfallsteuereinheit (18), die dazu konfiguriert ist, die Kandidatenzielbeschleunigung ($cta_i$) zu bestimmen, wenn die ICS-Steuereinheit (17) bestimmt, dass sich das Fahrzeug nicht in einem unvermeidlichen Kollisionszustand in Bezug auf das entsprechende vorausfahrende Fahrzeug ($V_i$) befindet, gemäß einem Notfallbeschleunigungsmodifikationsschema, wobei das Notfallbeschleunigungsmodifikationsschema dazu definiert ist, den jeweiligen Sicherheitsabstand ($sd_i$) innerhalb einer vordefinierten Zeit ($t_c$) zu erreichen und/oder ohne dass die Beschleunigung des Fahrzeugs unter eine erste vordefinierte untere Beschleunigungsgrenze fällt.

2.  ACC-System nach Anspruch 1, wobei das Sicherheitsmodul (14) ferner Folgendes umfasst:

    eine Nennsteuereinheit (16), die dazu konfiguriert ist, zu bestimmen, wenn die ICS-Steuereinheit (17) bestimmt, dass sich das Fahrzeug nicht in einem unvermeidlichen Kollisionszustand in Bezug auf das entsprechende vorausfahrende Fahrzeug ($V_i$) befindet, ob der jeweilige Sicherheitsabstand ($sd_i$) durch Modifizieren der Beschleunigung des Fahrzeugs ($a_0$) gemäß einem Komfortbeschleunigungsmodifikationsschema erreicht werden kann, wobei das Komfortbeschleunigungsmodifikationsschema dazu definiert ist, den jeweiligen Sicherheitsabstand ($sd_i$) innerhalb der vordefinierten Zeit ($t_c$) zu erreichen und ohne dass eine Zeitableitung der Beschleunigung des Fahrzeugs unter eine vordefinierte untere Beschleunigungsableitungsgrenze fällt und/oder ohne dass eine Beschleunigung des Fahrzeugs unter eine zweite vordefinierte untere Beschleunigungsgrenze fällt, wobei sich das Komfortbeschleunigungsmodifikationsschema von dem Notfallbeschleunigungsmodifikationsschema unterscheidet, wobei die Nennsteuereinheit (16) ferner dazu konfiguriert ist, die jeweilige Kandidatenzielbeschleunigung ($cta_i$) gemäß dem Komfortbeschleunigungsmodifikationsschema zu bestimmen, wenn die Nennsteuereinheit (16) bestimmt, dass der jeweilige Sicherheitsabstand ($sd_i$) durch Modifizieren der Beschleunigung des Fahrzeugs gemäß dem Komfortbeschleunigungsmodifikationsschema erreicht werden kann; und wobei die Notfallsteuereinheit (18) ferner dazu konfiguriert ist, die Kandidatenzielbeschleunigung ($cta_i$) gemäß dem Notfallbeschleunigungsmodifikationsschema zu bestimmen, wenn die Nennsteuereinheit (16) bestimmt, dass der jeweilige Sicherheitsabstand ($sd_i$) nicht durch Modifizieren der Beschleunigung des Fahrzeugs gemäß dem Komfortbeschleunigungsmodifikationsschema erreicht werden kann, und die ICS-Steuereinheit (17) bestimmt, dass sich das Fahrzeug nicht in einem unvermeidlichen Kollisionszustand in Bezug auf das entsprechende vorausfahrende Fahrzeug ($V_i$) befindet;

    wobei die Nennsteuereinheit (16) vorzugsweise dazu konfiguriert ist, zu bestimmen, ob der jeweilige Sicherheitsabstand ($sd_i$) gemäß dem Komfortbeschleunigungsmodifikationsschema unter der Annahme erreicht werden kann, dass sich das entsprechende vorausfahrende Fahrzeug ($V_i$) mit einer konstanten Geschwindigkeit bewegt, die der bestimmten jeweiligen Geschwindigkeit (vi) entspricht.

3.  ACC-System nach einem der vorhergehenden Ansprüche, wobei die Notfallsteuereinheit (18) ferner dazu konfiguriert ist, basierend auf dem jeweiligen Abstand ($d_i$) und der jeweiligen Geschwindigkeit ($v_i$) Folgendes zu bestimmen:

- ein Notfallruckprofil ($j_{emergency}(t)$), das eine zeitliche Entwicklung der zeitlichen Ableitung der Beschleunigung des Fahrzeugs definiert, die es ermöglicht, den jeweiligen Sicherheitsabstand ($sd_i$) innerhalb der vordefinierten Zeit ($t_c$) zu erreichen und/oder ohne dass die Beschleunigung des Fahrzeugs unter die erste vordefinierte untere Beschleunigungsgrenze fällt; und/oder

- ein Notfallbeschleunigungsprofil ($a_{emergency}(t)$), das eine zeitliche Entwicklung der Beschleunigung des Fahrzeugs definiert, die es ermöglicht, den jeweiligen Sicherheitsabstand ($sd_i$) innerhalb der vordefinierten Zeit ($t_c$) zu erreichen und/oder ohne dass die Beschleunigung des Fahrzeugs unter die erste vordefinierte untere Beschleunigungsgrenze fällt; und

wobei die Notfallsteuereinheit (18) dazu konfiguriert ist, die jeweilige Kandidatenzielbeschleunigung ($cta_i$) gemäß dem Notfallruckprofil ($j_{emergency}(t)$) und/oder dem Notfallbeschleunigungsprofil ($a_{emergency}(t)$) zu bestimmen.

4. ACC-System nach einem der Ansprüche 2 oder 3, wobei die Nennsteuereinheit (16) ferner dazu konfiguriert ist, wenn die Nennsteuereinheit (16) bestimmt, dass der jeweilige Sicherheitsabstand ($sd_i$) durch Modifizieren der Beschleunigung des Fahrzeugs gemäß dem Komfortbeschleunigungsmodifikationsschema erreicht werden kann, basierend auf dem jeweiligen Abstand ($d_i$) und der jeweiligen Geschwindigkeit (vi), die für das entsprechende vorausfahrende Fahrzeug ($V_i$) bestimmt wurden, Folgendes zu bestimmen:

- ein Komfortruckprofil ($j_{comfort}(t)$), das eine zeitliche Entwicklung der zeitlichen Ableitung der Beschleunigung des Fahrzeugs definiert, die es ermöglicht, den jeweiligen Sicherheitsabstand ($sd_i$) innerhalb der vordefinierten Zeit ($t_c$) zu erreichen, ohne dass eine zeitliche Ableitung der Beschleunigung des Fahrzeugs unter die vordefinierte untere Beschleunigungsableitungsgrenze fällt und/oder ohne dass die Beschleunigung des Fahrzeugs unter die zweite untere Beschleunigungsgrenze fällt; und/oder

- ein Komfortbeschleunigungsprofil ($a_{comfort}(t)$), das eine zeitliche Entwicklung der Beschleunigung des Fahrzeugs definiert, die es ermöglicht, den jeweiligen Sicherheitsabstand ($sd_i$) innerhalb der vordefinierten Zeit ($t_c$) zu erreichen, ohne dass eine zeitliche Ableitung der Beschleunigung des Fahrzeugs unter die vordefinierte untere Beschleunigungsableitungsgrenze fällt und/oder ohne dass die Beschleunigung des Fahrzeugs unter die zweite untere Beschleunigungsgrenze fällt; und

wobei die Nominalsteuereinheit (16) dazu konfiguriert ist, die jeweilige Kandidatenzielbeschleunigung ($cta_i$) gemäß dem Komfortruckprofil ($j_{comfort}(t)$) und/oder dem Komfortbeschleunigungsprofil ($a_{comfort}(t)$) zu bestimmen.

5. ACC-System nach Anspruch 3 und 4, wobei die Notfallsteuereinheit (18) dazu konfiguriert ist, das Notfallruckprofil ($j_{emergency}(t)$) und/oder das Notfallbeschleunigungsprofil ($a_{emergency}(t)$) zu bestimmen, wenn die Nominalsteuereinheit (16) bestimmt, dass der jeweilige Sicherheitsabstand ($sd_i$) nicht durch Modifizieren der Beschleunigung des Fahrzeugs gemäß dem Komfortbeschleunigungsmodifikationsschema erreicht werden kann, und/oder wenn die ICS-Steuereinheit (17) bestimmt, dass sich das Fahrzeug nicht in einem unvermeidlichen Kollisionszustand in Bezug auf das entsprechende vorausfahrende Fahrzeug ($V_i$) befindet.

6. ACC-System nach einem der Ansprüche 2 bis 5, wobei das Bestimmen der jeweiligen Kandidatenzielbeschleunigung ($cta_i$) gemäß dem Komfortbeschleunigungsmodifikationsschema durch die Nominalsteuereinheit (16) das Bestimmen der jeweiligen Kandidatenbeschleunigung ($cta_i$) als einen ersten Beschleunigungswert (a1) umfasst; und

wobei das Bestimmen der jeweiligen Kandidatenzielbeschleunigung ($cta_i$) gemäß dem Notfallbeschleunigungsmodifikationsschema durch die Notfallsteuereinheit (18) das Bestimmen der jeweiligen Kandidatenbeschleunigung ($cta_i$) als einen zweiten Beschleunigungswert (a2) umfasst;
wobei der erste Beschleunigungswert (a1) größer als der zweite Beschleunigungswert ($a_2$) ist; und/oder
wobei ein Minimalwert der Beschleunigung des Fahrzeugs oder der zeitlichen Ableitung davon gemäß dem Komfortbeschleunigungsmodifikationsschema größer als ein Minimalwert der Beschleunigung des Fahrzeugs oder der zeitlichen Ableitung davon gemäß dem Notfallbeschleunigungsmodifikationsschema ist.

7. ACC-System nach einem der vorhergehenden Ansprüche, ferner umfassend ein Abstandssteuermodul (20), das mit dem Detektionsmodul (12) verbunden und dazu konfiguriert ist, für jedes von mindestens einem Teil des einen oder der mehreren vorausfahrenden Fahrzeuge ($V_1$, ..., $V_n$), für die der bestimmte jeweilige Abstand ($d_1$, ..., $d_n$) gleich dem jeweiligen Sicherheitsabstand ($sd_1$, ..., $sd_n$) ist oder diesen überschreitet, zu bestimmen, ob sich das Fahrzeug ($V_o$) in einem potentiellen Kollisionszustand in Bezug auf das entsprechende vorausfahrende Fahrzeug

($V_i$) befindet, wobei der potentielle Kollisionszustand einem Zustand des Fahrzeugs ($V_o$) entspricht, in dem, wenn das entsprechende vorausfahrende Fahrzeug ($V_i$) ein vollständiges Bremsmanöver einleitet, ein Abstand zwischen dem Fahrzeug und dem entsprechenden vorausfahrenden Fahrzeug innerhalb eines vordefinierten Zeitintervalls ($\Delta t$) kleiner als der jeweilige Sicherheitsabstand ($sd_i$) wird, es sei denn, die Beschleunigung des Fahrzeugs wird modifiziert;

wobei, wenn das Abstandssteuermodul (20) bestimmt, dass sich das Fahrzeug ($V_o$) in einem potentiellen Kollisionszustand in Bezug auf das entsprechende vorausfahrende Fahrzeug ($V_i$) befindet, das Abstandssteuermodul (20) ferner zu Folgendem konfiguriert ist:

Bestimmen der entsprechenden Kandidatenzielbeschleunigung ($cta_i$) gemäß einem vorbestimmten Abstandssteuerbeschleunigungsmodifikationsschema.

8. ACC-System nach einem der vorhergehenden Ansprüche, wobei der mindestens eine Teil des einen oder der mehreren detektierten vorausfahrenden Fahrzeuge ($V_1$, ..., $V_n$), für die der bestimmte Abstand ($d_1$, ..., $d_n$) kleiner als der jeweilige Sicherheitsabstand ($sd_1$, ..., $sd_n$) ist, und/oder der mindestens eine Teil des einen oder der mehreren vorausfahrenden Fahrzeuge ($V_1$, ..., $V_n$), für die der bestimmte Abstand ($d_1$, ..., $d_n$) gleich dem jeweiligen Sicherheitsabstand ($sd_1$, ..., $sd_n$) ist oder diesen überschreitet, vorausfahrende Fahrzeuge umfasst, für die eine Ausschlussbedingung nicht erfüllt ist, wobei die Ausschlussbedingung für ein gegebenes vorausfahrendes Fahrzeug ($V_i$) erfüllt ist, wenn

- ein anderes vorausfahrendes Fahrzeug ($V_j$) existiert, für das der bestimmte Abstand ($d_j$) und die bestimmte Geschwindigkeit ($v_j$) jeweils kleiner als der Abstand ($d_i$) und die Geschwindigkeit ($v_i$) sind, die für das gegebene vorausfahrende Fahrzeug ($V_i$) bestimmt wurden; und/oder
- eine Differenz zwischen dem für das gegebene vorausfahrende Fahrzeug ($d_i$) bestimmten Abstand und einem Anhalteabstand ($d_{stop}$) des Fahrzeugs ($V_o$) gleich oder größer als null oder ein Sicherheitsabstand ist, wobei der Anhalteabstand ($d_{stop}$) des Fahrzeugs ($V_o$) einem Mindestabstand entspricht, der vom Fahrzeug zurückgelegt wird, bis das Fahrzeug in einen Nullgeschwindigkeitszustand kommt, insbesondere gemäß einem vordefinierten Bremsbeschleunigungsmodifikationsschema; und/oder

ferner umfassend ein Auswahlmodul (22), das dazu konfiguriert ist, unter allen Kandidatenzielbeschleunigungen ($cta_1$, ..., $cta_n$), die durch das Sicherheitsmodul (14) oder das Abstandssteuermodul (20) bestimmt wurden, eine minimale Kandidatenzielbeschleunigung ($cta_{min}$) auszuwählen, wobei die minimale Kandidatenzielbeschleunigung kleiner als alle anderen Kandidatenzielbeschleunigungen ist.

9. Fahrzeug ($V_o$), das Folgendes umfasst:

ein Fahrzeugtrajektoriensteuersystem (40), das dazu konfiguriert ist, eine Beschleunigung und/oder eine Geschwindigkeit des Fahrzeugs ($V_o$) zu steuern; und ein adaptives Geschwindigkeitsregelungssystem (ACC) (10) nach einem der vorhergehenden Ansprüche,

wobei das Fahrzeugtrajektoriensteuersystem (40) dazu konfiguriert ist, die Beschleunigung und/oder die Geschwindigkeit des Fahrzeugs ($V_o$) gemäß einer Zielgeschwindigkeit ($v_{target}$) und/oder einer Kandidatenzielbeschleunigung ($cta_i$), die durch das ACC-System (10) bestimmt wurde, vorzugsweise gemäß einer minimalen Kandidatenzielbeschleunigung ($cta_{min}$), die unter mehreren Kandidatenzielbeschleunigungen ($cta_1$, ..., $cta_n$) ausgewählt wurde, die für entsprechende mehrere erkannte vorausfahrende Fahrzeuge bestimmt wurden, zu steuern.

10. Verfahren (200) zum Bestimmen einer Zielbeschleunigung ($a_{target}$) eines Fahrzeugs ($V_o$), wobei das Verfahren Folgendes umfasst:

Detektieren ($102_i$) eines oder mehrerer vorausfahrender Fahrzeuge ($V_1$, ..., $V_n$), die vor dem Fahrzeug ($V_o$) fahren;

Bestimmen ($104_i$) einer Geschwindigkeit ($v_1$, ..., $v_n$) und eines Abstands ($d_1$, ..., $d_n$) jedes des einen oder der mehreren detektierten vorausfahrenden Fahrzeuge ($V_1$, ..., $V_n$) in Bezug auf das Fahrzeug ($V_o$); und

Bestimmen der Zielbeschleunigung ($a_{target}$) durch Bestimmen ($204_i$) für jedes vorausfahrende Fahrzeug von mindestens einem Teil des einen oder der mehreren detektierten vorausfahrenden Fahrzeuge ($V_1$, ..., $V_n$) einer jeweiligen Kandidatenzielbeschleunigung ($cta_i$) des Fahrzeugs ($V_o$) und durch Auswählen (206) der minimalen Kandidatenzielbeschleunigung ($cta_{min}$) als die Zielbeschleunigung ($a_{target}$), **dadurch gekennzeichnet, dass** das Bestimmen der entsprechenden Kandidatenzielbeschleunigung ($cta_i$) für ein entsprechendes vorausfahrendes Fahrzeug ($V_i$) in jedem Fall Folgendes umfasst:

Bestimmen ($106_i$), ob der entsprechende bestimmte Abstand ($d_i$) kleiner als ein jeweiliger Sicherheitsabstand ($sd_i$) ist, und wenn der entsprechende bestimmte Abstand ($d_i$) kleiner als der jeweilige Sicherheitsabstand ($sd_i$) ist:

Bestimmen ($120_i$), ob sich das Fahrzeug ($V_o$) in einem unvermeidlichen Kollisionszustand in Bezug auf das entsprechende vorausfahrende Fahrzeug ($V_i$) befindet oder befinden wird, wobei der unvermeidliche Kollisionszustand einem Zustand des Fahrzeugs ($V_o$) entspricht, in dem eine Kollision mit dem entsprechenden vorausfahrenden Fahrzeug ($V_i$) ungeachtet einer Modifikation der Beschleunigung des Fahrzeugs ($V_o$) unvermeidlich ist, und wenn sich das Fahrzeug ($V_o$) in einem unvermeidlichen Kollisionszustand in Bezug auf das entsprechende vorausfahrende Fahrzeug ($V_i$) befindet, Bestimmen der entsprechenden Kandidatenzielbeschleunigung ($cta_i$) als eine minimal mögliche Beschleunigung ($ao_{min}$) des Fahrzeugs; und wenn sich das Fahrzeug ($V_o$) nicht in einem unvermeidlichen Kollisionszustand in Bezug auf das entsprechende vorausfahrende Fahrzeug ($V_i$) befindet, Bestimmen ($132_i$) der entsprechenden Kandidatenzielbeschleunigung ($cta_i$) gemäß einem Notfallbeschleunigungsmodifikationsschema, wobei das Notfallbeschleunigungsmodifikationsschema dazu definiert ist, den jeweiligen Sicherheitsabstand ($sd_i$) innerhalb einer vordefinierten Zeit ($t_c$) zu erreichen und/oder ohne dass die Beschleunigung des Fahrzeugs unter eine erste vordefinierte untere Beschleunigungsgrenze fällt.

11. Verfahren nach Anspruch 10, wobei, wenn der entsprechende bestimmte Abstand ($d_i$) kleiner als der jeweilige Sicherheitsabstand ($sd_i$) ist und sich das Fahrzeug ($V_o$) nicht in einem unvermeidlichen Kollisionszustand in Bezug auf das entsprechende vorausfahrende Fahrzeug ($V_i$) befindet, das Bestimmen der entsprechenden Kandidatenzielbeschleunigung ($cta_i$) für ein entsprechendes vorausfahrendes Fahrzeug ($V_i$) ferner Folgendes umfasst:

Bestimmen ($124_i$), ob es möglich ist, den jeweiligen Sicherheitsabstand ($sd_i$) zu erreichen, indem die Beschleunigung des Fahrzeugs ($V_o$) gemäß einem Komfortbeschleunigungsmodifikationsschema modifiziert wird, wobei das Komfortbeschleunigungsmodifikationsschema dazu definiert ist, den jeweiligen Sicherheitsabstand ($sd_i$) innerhalb einer vordefinierten Zeit ($t_c$) zu erreichen und/oder ohne dass eine zeitliche Ableitung der Beschleunigung des Fahrzeugs unter eine vordefinierte untere Beschleunigungsableitungsgrenze ($j_{lim}$) fällt und/oder ohne dass eine Beschleunigung des Fahrzeugs unter eine zweite vordefinierte untere Beschleunigungsgrenze fällt, und

wenn es möglich ist, den jeweiligen Sicherheitsabstand ($sd_i$) gemäß dem Komfortbeschleunigungsmodifikationsschema zu erreichen, Bestimmen ($128i$) der entsprechenden Kandidatenzielbeschleunigung ($cta_i$) gemäß dem Komfortbeschleunigungsmodifikationsschema; und wobei die entsprechende Kandidatenzielbeschleunigung ($cta_i$) gemäß dem Notfallbeschleunigungsmodifikationsschema bestimmt wird, wenn sich das Fahrzeug ($V_o$) nicht in einem unvermeidlichen Kollisionszustand in Bezug auf das entsprechende vorausfahrende Fahrzeug ($V_i$) befindet und es nicht möglich ist, den jeweiligen Sicherheitsabstand ($sd_i$) gemäß dem Komfortbeschleunigungsmodifikationsschema zu erreichen, wobei das Bestimmen ($124_i$), ob es möglich ist, den jeweiligen Sicherheitsabstand ($sd_i$) zu erreichen, durch Modifizieren der Beschleunigung des Fahrzeugs gemäß dem Komfortbeschleunigungsmodifikationsschema vorzugsweise das Annehmen umfasst, dass sich das entsprechende vorausfahrende Fahrzeug ($V_i$) mit einer konstanten Geschwindigkeit bewegt, die der bestimmten jeweiligen Geschwindigkeit ($v_i$) entspricht.

12. Verfahren nach einem der Ansprüche 10 oder 11, wobei das Bestimmen der entsprechenden Kandidatenzielbeschleunigung ($cta_i$) gemäß dem Notfallbeschleunigungsmodifikationsschema das Bestimmen ($130_i$) basierend auf dem jeweiligen Abstand ($d_i$) und der jeweiligen Geschwindigkeit ($v_i$), die für das entsprechende vorausfahrende Fahrzeug ($V_i$) bestimmt wurden, umfasst

- ein Notfallruckprofil ($j_{emergency}(t)$), das eine zeitliche Entwicklung der zeitlichen Ableitung der Beschleunigung des Fahrzeugs definiert, die es ermöglicht, den jeweiligen Sicherheitsabstand ($sd_i$) innerhalb der vordefinierten Zeit ($t_c$) zu erreichen und/oder ohne dass die Beschleunigung des Fahrzeugs unter die erste vordefinierte untere Beschleunigungsgrenze fällt; und/oder
- ein Notfallbeschleunigungsprofil ($a_{emergency}(t)$), das eine zeitliche Entwicklung der Beschleunigung des Fahrzeugs definiert, die es ermöglicht, den jeweiligen Sicherheitsabstand ($sd_i$) innerhalb der vordefinierten Zeit ($t_c$) zu erreichen und/oder ohne dass die Beschleunigung des Fahrzeugs unter die erste vordefinierte untere Beschleunigungsgrenze fällt; und

wobei die jeweilige Kandidatenzielbeschleunigung ($cta_i$) für das entsprechende vorausfahrende Fahrzeug ($V_i$) gemäß dem Notfallruckprofil ($j_{emergency}(t)$) und/oder dem Notfallbeschleunigungsprofil ($a_{emergency}(t)$) bestimmt wird.

13. Verfahren nach einem der Ansprüche 11 oder 12, wobei das Bestimmen der entsprechenden Kandidatenzielbeschleunigung ($cta_i$) gemäß dem Komfortbeschleunigungsmodifikationsschema das Bestimmen ($126_i$) basierend auf dem jeweiligen Abstand ($d_i$) und der jeweiligen Geschwindigkeit ($v_i$), die für das entsprechende vorausfahrende Fahrzeug ($V_i$) bestimmt wurden, umfasst:

- ein Komfortruckprofil ($j_{comfort}(t)$), das eine zeitliche Entwicklung der zeitlichen Ableitung der Beschleunigung des Fahrzeugs definiert, die es ermöglicht, den jeweiligen Sicherheitsabstand ($sd_i$) innerhalb der vordefinierten Zeit ($t_c$) zu erreichen, ohne dass eine zeitliche Ableitung der Beschleunigung des Fahrzeugs unter die vordefinierte untere Beschleunigungsableitungsgrenze fällt und/oder ohne dass die Beschleunigung des Fahrzeugs unter die zweite untere Beschleunigungsgrenze fällt; und/oder

- ein Komfortbeschleunigungsprofil ($a_{comfort}(t)$), das eine zeitliche Entwicklung der Beschleunigung des Fahrzeugs definiert, die es ermöglicht, den jeweiligen Sicherheitsabstand ($sd_i$) innerhalb der vordefinierten Zeit ($t_c$) zu erreichen, ohne dass eine zeitliche Ableitung der Beschleunigung des Fahrzeugs unter die vordefinierte untere Beschleunigungsableitungsgrenze fällt und/oder ohne dass die Beschleunigung des Fahrzeugs unter die zweite untere Beschleunigungsgrenze fällt; und

wobei die jeweilige Kandidatenzielbeschleunigung ($cta_i$) für das entsprechende vorausfahrende Fahrzeug ($V_i$) gemäß dem Komfortruckprofil ($j_{comfort}(t)$) und/oder dem Komfortbeschleunigungsprofil ($a_{comfort}(t)$) bestimmt wird.

14. Verfahren nach den Ansprüchen 12 und 13, wobei das Notfallruckprofil ($j_{emergency}(t)$) und/oder das Notfallbeschleunigungsprofil ($a_{emergency}(t)$) bestimmt wird, wenn der jeweilige Sicherheitsabstand ($sd_i$) nicht durch Modifizieren der Beschleunigung des Fahrzeugs gemäß dem Komfortbeschleunigungsmodifikationsschema erreicht werden kann und/oder wenn sich das Fahrzeug ($V_o$) nicht in einem unvermeidlichen Kollisionszustand in Bezug auf das entsprechende vorausfahrende Fahrzeug ($V_i$) befindet.

15. Verfahren nach einem der Ansprüche 11 bis 14, wobei das Bestimmen der entsprechenden Kandidatenzielbeschleunigung ($cta_i$) eines entsprechenden vorausfahrenden Fahrzeugs ($V_i$) ferner, wenn der entsprechende bestimmte Abstand ($d_i$) gleich dem jeweiligen Sicherheitsabstand ($sd_i$) ist oder diesen überschreitet, das Bestimmen ($110_i$) umfasst, ob sich das Fahrzeug ($V_o$) in einem potentiellen Kollisionszustand in Bezug auf das entsprechende vorausfahrende Fahrzeug ($V_i$) befindet, wobei der potentielle Kollisionszustand einem Zustand des Fahrzeugs ($V_o$) entspricht, in dem, wenn das entsprechende vorausfahrende Fahrzeug ($V_i$) ein vollständiges Bremsmanöver einleitet, ein Abstand zwischen dem Fahrzeug ($V_o$) und dem entsprechenden vorausfahrenden Fahrzeug ($V_i$) innerhalb eines vordefinierten Zeitintervalls ($\Delta t$) kleiner als der jeweilige Sicherheitsabstand ($sd_i$) wird, es sei denn, die Beschleunigung des Fahrzeugs ($V_o$) wird modifiziert; und

wenn sich das Fahrzeug ($V_o$) in einem potentiellen Kollisionszustand in Bezug auf das entsprechende vorausfahrende Fahrzeug ($V_i$) befindet, Bestimmen ($114_i$) der entsprechenden Kandidatenzielbeschleunigung ($cta_i$) gemäß einem vorbestimmten Abstandssteuerbeschleunigungsmodifikationsschema.

**Revendications**

1. Système de régulation de vitesse adaptative (ACC) pour un véhicule ($V_o$) comprenant :

un module de détection (12) configuré pour détecter un ou plusieurs véhicules précédents ($V_1$, ..., $V_n$) conduisant devant le véhicule ($V_o$) et pour déterminer une vitesse respective ($v1$, ..., $v_n$) et une distance respective ($d_1$, ..., $d_n$) de chacun des véhicules précédents détectés par rapport au véhicule ($V_o$) ; dans lequel le module de détection (12) est en outre configuré pour déterminer si chacune des distances déterminées est inférieure à une distance de sécurité respective ; et

un module de sécurité (14) connecté au module de détection (12), dans lequel le module de sécurité (14) est configuré pour déterminer, pour chaque véhicule précédent d'au moins une partie des un ou plusieurs véhicules précédents détectés pour lesquels la distance déterminée ($d_1$, ..., $d_n$) est inférieure à la distance de sécurité respective ($sd_1$, ..., $sd_n$), une accélération cible candidate respective ($cta_1$, ..., $cta_n$) du véhicule ($V_o$), **caractérisé en ce que** le module de sécurité (14) comprend :

une unité de commande ICS (17) configurée pour déterminer si le véhicule ($V_o$) est ou sera dans un état de collision inévitable par rapport au véhicule précédent correspondant ($V_i$), dans lequel l'état de collision inévitable correspond à un état du véhicule ($V_o$) dans lequel une collision avec le véhicule précédent correspondant ($V_i$) est inévitable indépendamment d'une modification d'une accélération du véhicule ($V_o$) ;

dans lequel l'unité de commande ICS (17) est en outre configurée pour déterminer l'accélération cible candidate respective ($cta_i$) correspondant à une accélération minimale possible ($ao_{min}$) du véhicule si l'unité de commande ICS (17) détermine que le véhicule est dans un état de collision inévitable ; et
une unité de commande d'urgence (18) configurée pour déterminer l'accélération cible candidate ($cta_i$), si l'unité de commande ICS (17) détermine que le véhicule n'est pas dans un état de collision inévitable par rapport au véhicule précédent correspondant ($V_i$), selon un schéma de modification d'accélération d'urgence, dans lequel le schéma de modification d'accélération d'urgence est défini pour atteindre la distance de sécurité respective ($sd_i$) dans un temps prédéfini ($t_c$) et/ou sans que l'accélération du véhicule ne tombe en dessous d'une première limite inférieure d'accélération prédéfinie.

2. Système ACC selon la revendication 1, dans lequel le module de sécurité (14) comprend en outre :

une unité de commande nominale (16) configurée pour déterminer, si l'unité de commande ICS (17) détermine que le véhicule n'est pas dans un état de collision inévitable par rapport au véhicule précédent correspondant ($V_i$), si la distance de sécurité respective ($sd_i$) peut être atteinte en modifiant l'accélération du véhicule ($a_o$) selon un schéma de modification d'accélération de confort, dans lequel le schéma de modification d'accélération de confort est défini pour atteindre la distance de sécurité respective ($sd_i$) dans le temps prédéfini ($t_c$) et sans qu'une dérivée temporelle de l'accélération du véhicule ne tombe en dessous d'une limite inférieure de dérivée d'accélération prédéfinie et/ou sans qu'une accélération du véhicule ne tombe en dessous d'une seconde limite inférieure d'accélération prédéfinie, dans lequel le schéma de modification d'accélération de confort est différent du schéma de modification d'accélération d'urgence, dans lequel l'unité de commande nominale (16) est en outre configurée pour déterminer l'accélération cible candidate respective ($cta_i$) selon le schéma de modification d'accélération de confort si l'unité de commande nominale (16) détermine que la distance de sécurité respective ($sd_i$) peut être atteinte en modifiant l'accélération du véhicule selon le schéma de modification d'accélération de confort ; et dans lequel l'unité de commande d'urgence (18) est en outre configurée pour déterminer l'accélération cible candidate ($cta_i$) selon le schéma de modification d'accélération d'urgence si l'unité de commande nominale (16) détermine que la distance de sécurité respective ($sd_i$) ne peut pas être atteinte en modifiant l'accélération du véhicule selon le schéma de modification d'accélération de confort et l'unité de commande ICS (17) détermine que le véhicule n'est pas dans un état de collision inévitable par rapport au véhicule précédent correspondant ($V_i$) ;
dans lequel l'unité de commande nominale (16) est de préférence configurée pour déterminer si la distance de sécurité respective ($sd_i$) peut être atteinte selon le schéma de modification d'accélération de confort en supposant que le véhicule précédent correspondant ($V_i$) se déplace à une vitesse constante correspondant à la vitesse respective déterminée ($v_i$).

3. Système ACC selon l'une quelconque des revendications précédentes, dans lequel l'unité de commande d'urgence (18) est en outre configurée pour déterminer, sur la base de la distance respective ($d_i$) et de la vitesse respective ($v_i$) :

- un profil de secousse d'urgence ($j_{emergency}(t)$) définissant une évolution temporelle de la dérivée temporelle de l'accélération du véhicule permettant d'atteindre la distance de sécurité respective ($sd_i$) dans le temps prédéfini ($t_c$) et/ou sans que l'accélération du véhicule ne tombe en dessous de la première limite inférieure d'accélération prédéfinie ; et/ou
- un profil d'accélération d'urgence ($a_{emergency}(t)$) définissant une évolution temporelle de l'accélération du véhicule permettant d'atteindre la distance de sécurité respective ($sd_i$) dans le temps prédéfini ($t_c$) et/ou sans que l'accélération du véhicule ne tombe en dessous de la première limite inférieure d'accélération prédéfinie ; et

dans lequel l'unité de commande d'urgence (18) est configurée pour déterminer l'accélération cible candidate respective ($cta_i$) en fonction du profil de secousse d'urgence ($j_{emergency}(t)$) et/ou du profil d'accélération d'urgence ($a_{emergency}(t)$).

4. Système ACC selon l'une quelconque des revendications 2 ou 3, dans lequel l'unité de commande nominale (16) est en outre configurée pour, si l'unité de commande nominale (16) détermine que la distance de sécurité respective ($sd_i$) peut être atteinte en modifiant l'accélération du véhicule selon le schéma de modification d'accélération de confort, déterminer, sur la base de la distance respective ($d_i$) et de la vitesse respective ($v_i$) déterminées pour le véhicule précédent correspondant ($V_i$) :

- un profil de secousse de confort ($j_{comfort}(t)$) définissant une évolution temporelle de la dérivée temporelle de l'accélération du véhicule permettant d'atteindre la distance de sécurité respective ($sd_i$) dans le temps prédéfini

($t_c$) sans qu'une dérivée temporelle de l'accélération du véhicule ne tombe en dessous de la limite inférieure de dérivée d'accélération prédéfinie et/ou sans que l'accélération du véhicule ne tombe en dessous de la seconde limite inférieure d'accélération ; et/ou
- un profil d'accélération de confort ($a_{comfort}(t)$) définissant une évolution temporelle de l'accélération du véhicule permettant d'atteindre la distance de sécurité respective ($sd_i$) dans le temps prédéfini ($t_c$) sans qu'une dérivée temporelle de l'accélération du véhicule ne tombe en dessous de la limite inférieure de dérivée d'accélération prédéfinie et/ou sans que l'accélération du véhicule ne tombe en dessous de la seconde limite inférieure d'accélération ; et

dans lequel l'unité de commande nominale (16) est configurée pour déterminer l'accélération cible candidate respective ($cta_i$) en fonction du profil de secousse de confort ($j_{comfort}(t)$) et/ou du profil d'accélération de confort ($a_{comfort}(t)$).

5. Système ACC selon les revendications 3 et 4, dans lequel l'unité de commande d'urgence (18) est configurée pour déterminer ledit profil de secousse d'urgence ($j_{emergency}(t)$) et/ou ledit profil d'accélération d'urgence ($a_{emergency}(t)$) si l'unité de commande nominale (16) détermine que la distance de sécurité respective ($sd_i$) ne peut pas être atteinte en modifiant l'accélération du véhicule selon le schéma de modification d'accélération de confort et/ou si l'unité de commande ICS (17) détermine que le véhicule n'est pas dans un état de collision inévitable par rapport au véhicule précédent correspondant ($V_i$).

6. Système ACC selon l'une quelconque des revendications 2 à 5, dans lequel la détermination de l'accélération cible candidate respective ($cta_i$) selon le schéma de modification d'accélération de confort par l'unité de commande nominale (16) comprend la détermination de l'accélération candidate respective ($cta_i$) en tant que première valeur d'accélération ($a_1$) ; et

dans lequel la détermination de l'accélération cible candidate respective ($cta_i$) selon le schéma de modification d'accélération d'urgence par l'unité de commande d'urgence (18) comprend la détermination de l'accélération candidate respective ($cta_i$) en tant que seconde valeur d'accélération ($a_2$) ;
dans lequel la première valeur d'accélération ($a_1$) est supérieure à la seconde valeur d'accélération ($a_2$) ; et/ou
dans lequel une valeur minimale de l'accélération du véhicule ou de sa dérivée temporelle selon le schéma de modification d'accélération de confort est supérieure à une valeur minimale de l'accélération du véhicule ou de sa dérivée temporelle selon le schéma de modification d'accélération d'urgence.

7. Système ACC selon l'une quelconque des revendications précédentes, comprenant en outre un module de commande de distance (20) connecté au module de détection (12) et configuré pour, pour chacun d'au moins une partie des un ou plusieurs véhicules précédents ($V_1$, ..., $V_n$) pour lesquels la distance respective déterminée ($d_1$, ..., $d_n$) est égale ou supérieure à la distance de sécurité respective ($sd_1$, ..., $sd_n$), déterminer si le véhicule ($V_o$) est dans un état de collision potentielle par rapport au véhicule précédent correspondant ($V_i$), dans lequel l'état de collision potentielle correspond à un état du véhicule ($V_o$) dans lequel si le véhicule précédent correspondant ($V_i$) initie une manoeuvre de freinage complète, une distance entre le véhicule et le véhicule précédent correspondant deviendra inférieure à la distance de sécurité respective ($sd_i$) dans un intervalle de temps prédéfini ($\Delta t$) à moins que l'accélération du véhicule ne soit modifiée ;
dans lequel, si le module de commande de distance (20) détermine que le véhicule ($V_o$) est dans un état de collision potentiel par rapport au véhicule précédent correspondant ($V_i$), le module de commande de distance (20) est en outre configuré pour :
déterminer l'accélération cible candidate correspondante ($cta_i$) selon un schéma de modification d'accélération de commande de distance prédéterminé.

8. Système ACC selon l'une quelconque des revendications précédentes, dans lequel ladite au moins une partie des un ou plusieurs véhicules précédents détectés ($V_1$, ..., $V_n$) pour lesquels la distance déterminée ($d_1$, ..., $d_n$) est inférieure à la distance de sécurité respective ($sd_1$, ..., $sd_n$) et/ou ladite au moins une partie des un ou plusieurs véhicules précédents ($V_1$, ..., $V_n$) pour lesquels la distance déterminée ($d_1$, ..., $d_n$) est égale ou supérieure à la distance de sécurité respective ($sd_1$, ..., $sd_n$) comprend des véhicules précédents pour lesquels une condition d'exclusion n'est pas remplie, dans lequel la condition d'exclusion est remplie pour un véhicule précédent donné ($V_i$) si

- il existe un autre véhicule précédent ($V_j$) pour lequel la distance déterminée ($d_j$) et la vitesse déterminée ($v_j$) sont respectivement inférieures à la distance ($d_i$) et à la vitesse ($v_i$) déterminées pour ledit véhicule précédent donné ($V_i$) ; et/ou

- une différence entre la distance déterminée pour ledit véhicule précédent donné ($d_i$) et une distance d'arrêt ($d_{stop}$) du véhicule ($V_o$) est égale ou supérieure à zéro ou à une marge de sécurité, dans lequel la distance d'arrêt ($d_{stop}$) du véhicule ($V_o$) correspond à une distance minimale parcourue par le véhicule jusqu'à ce que le véhicule arrive à un état de vitesse nulle, en particulier selon un schéma de modification d'accélération de freinage prédéfini ; et/ou

comprenant en outre un module de sélection (22) configuré pour sélectionner, parmi toutes les accélérations cibles candidates ($cta_1$, ..., $cta_n$) déterminées par le module de sécurité (14) ou le module de commande de distance (20), une accélération cible candidate minimale ($cta_{min}$), dans lequel l'accélération cible candidate minimale est inférieure à toutes les autres accélérations cibles candidates.

9. Véhicule ($V_o$) comprenant :

un système de commande de trajectoire de véhicule (40) configuré pour commander une accélération et/ou une vitesse du véhicule ($V_o$) ; et
un système de régulation de vitesse adaptative (ACC) (10) selon l'une quelconque des revendications précédentes,
dans lequel le système de commande de trajectoire de véhicule (40) est configuré pour commander l'accélération et/ou la vitesse du véhicule ($V_o$) selon une vitesse cible ($v_{target}$) et/ou une accélération cible candidate ($cta_i$) déterminée par le système ACC (10), de préférence selon une accélération cible candidate minimale ($cta_{min}$) sélectionnée parmi une pluralité d'accélérations cibles candidates ($cta_1$, ..., $cta_n$) déterminées pour une pluralité correspondante de véhicules précédents détectés.

10. Procédé (200) de détermination d'une accélération cible ($a_{target}$) d'un véhicule ($V_o$), le procédé comprenant :

la détection ($102_i$ d'un ou plusieurs véhicules précédents ($V_1$, ..., $V_n$) conduisant devant le véhicule ($V_o$) ;
la détermination ($104_i$) d'une vitesse ($v1$, ..., $v_n$) et d'une distance ($d_1$, ..., $d_n$) de chacun des un ou plusieurs véhicules précédents détectés ($V_1$, ..., $V_n$) par rapport au véhicule ($V_o$) ; et
la détermination de l'accélération cible ($a_{target}$) en déterminant ($204_i$), pour chaque véhicule précédent d'au moins une partie des un ou plusieurs véhicules précédents détectés ($V_1$, ..., $V_n$), une accélération cible candidate respective ($cta_i$) du véhicule ($V_o$), et en sélectionnant (206) comme accélération cible ($a_{target}$) l'accélération cible candidate minimale ($cta_{min}$), **caractérisé en ce que** la détermination de l'accélération cible candidate correspondante ($cta_i$) pour un véhicule précédent correspondant ($V_i$) comprend dans chaque cas :
la détermination ($106_i$) si la distance déterminée correspondante ($d_i$) est inférieure à une distance de sécurité respective ($sd_i$), et, si la distance déterminée correspondante ($d_i$) est inférieure à la distance de sécurité respective ($sd_i$) :

la détermination ($120_i$) si le véhicule ($V_o$) est ou sera dans un état de collision inévitable par rapport au véhicule précédent correspondant ($V_i$), dans lequel l'état de collision inévitable correspond à un état du véhicule ($V_o$) dans lequel une collision avec le véhicule précédent correspondant ($V_i$) est inévitable indépendamment d'une modification de l'accélération du véhicule ($V_o$), et si le véhicule ($V_o$) est dans un état de collision inévitable par rapport au véhicule précédent correspondant ($V_i$), la détermination de l'accélération cible candidate correspondante ($cta_i$) comme une accélération possible minimale ($ao_{min}$) du véhicule ; et
si le véhicule ($V_o$) n'est pas dans un état de collision inévitable par rapport au véhicule précédent correspondant ($V_i$), la détermination ($132_i$) de l'accélération cible candidate correspondante ($cta_i$) selon un schéma de modification d'accélération d'urgence, dans lequel le schéma de modification d'accélération d'urgence est défini pour atteindre la distance de sécurité respective ($sd_i$) dans un temps prédéfini ($t_c$) et/ou sans que l'accélération du véhicule ne tombe en dessous d'une première limite inférieure d'accélération prédéfinie.

11. Procédé selon la revendication 10, dans lequel si la distance déterminée correspondante ($d_i$) est inférieure à la distance de sécurité respective ($sd_i$) et le véhicule ($V_o$) n'est pas dans un état de collision inévitable par rapport au véhicule précédent correspondant ($V_i$), la détermination de l'accélération cible candidate correspondante ($cta_i$) pour un véhicule précédent correspondant ($V_i$) comprend en outre :

déterminer ($124_i$) s'il est faisable d'atteindre la distance de sécurité respective ($sd_i$) en modifiant l'accélération du véhicule ($V_o$) selon un schéma de modification d'accélération de confort, dans lequel le schéma de modification d'accélération de confort est défini pour atteindre la distance de sécurité respective ($sd_i$) dans un temps

prédéfini ($t_c$) et/ou sans qu'une dérivée temporelle de l'accélération du véhicule ne tombe en dessous d'une limite inférieure de dérivée d'accélération prédéfinie ($j_{lim}$) et/ou sans qu'une accélération du véhicule ne tombe en dessous d'une seconde limite inférieure d'accélération prédéfinie, et

s'il est faisable d'atteindre la distance de sécurité respective ($sd_i$) selon le schéma de modification d'accélération de confort, déterminer ($128_i$) l'accélération cible candidate correspondante ($cta_i$) selon le schéma de modification d'accélération de confort ; et dans lequel l'accélération cible candidate correspondante ($cta_i$) est déterminée selon le schéma de modification d'accélération d'urgence si le véhicule ($V_o$) n'est pas dans un état de collision inévitable par rapport au véhicule précédent correspondant ($V_i$) et il n'est pas faisable d'atteindre la distance de sécurité respective ($sd_i$) selon le schéma de modification d'accélération de confort, dans lequel la détermination ($124_i$) s'il est faisable d'atteindre la distance de sécurité respective ($sd_i$) en modifiant l'accélération du véhicule selon le schéma de modification d'accélération de confort comprend de préférence la supposition que le véhicule précédent correspondant ($V_i$) se déplace à une vitesse constante, correspondant à la vitesse respective déterminée ($v_i$).

**12.** Procédé selon l'une quelconque des revendications 10 ou 11, dans lequel la détermination de l'accélération cible candidate correspondante ($cta_i$) selon le schéma de modification d'accélération d'urgence comprend la détermination ($130_i$), sur la base de la distance respective ($d_i$) et de la vitesse respective ($v_i$) déterminées pour le véhicule précédent correspondant ($V_i$)

- un profil de secousse d'urgence ($j_{emergency}(t)$) définissant une évolution temporelle de la dérivée temporelle de l'accélération du véhicule permettant d'atteindre la distance de sécurité respective ($sd_i$) dans le temps prédéfini ($t_c$) et/ou sans que l'accélération du véhicule ne tombe en dessous de la première limite inférieure d'accélération prédéfinie ; et/ou
- un profil d'accélération d'urgence ($a_{emergency}(t)$) définissant une évolution temporelle de l'accélération du véhicule permettant d'atteindre la distance de sécurité respective ($sd_i$) dans le temps prédéfini ($t_c$) et/ou sans que l'accélération du véhicule ne tombe en dessous de la première limite inférieure d'accélération prédéfinie ; et

dans lequel l'accélération cible candidate respective ($cta_i$) pour le véhicule précédent correspondant ($V_i$) est déterminée en fonction du profil de secousse d'urgence ($j_{emergency}(t)$) et/ou du profil d'accélération d'urgence ($a_{emergency}(t)$).

**13.** Procédé selon l'une quelconque des revendications 11 ou 12, dans lequel la détermination de l'accélération cible candidate correspondante ($cta_i$) selon le schéma de modification d'accélération de confort comprend la détermination ($126_i$), sur la base de la distance respective ($d_i$) et de la vitesse respective ($v_i$) déterminées pour le véhicule précédent correspondant ($V_i$) :

- un profil de secousse de confort ($j_{comfort}(t)$) définissant une évolution temporelle de la dérivée temporelle de l'accélération du véhicule permettant d'atteindre la distance de sécurité respective ($sd_i$) dans le temps prédéfini ($t_c$) sans qu'une dérivée temporelle de l'accélération du véhicule ne tombe en dessous de la limite inférieure de dérivée d'accélération prédéfinie et/ou sans que l'accélération du véhicule ne tombe en dessous de la seconde limite inférieure d'accélération ; et/ou
- un profil d'accélération de confort ($a_{comfort}(t)$) définissant une évolution temporelle de l'accélération du véhicule permettant d'atteindre la distance de sécurité respective ($sd_i$) dans le temps prédéfini ($t_c$) sans qu'une dérivée temporelle de l'accélération du véhicule ne tombe en dessous de la limite inférieure de dérivée d'accélération prédéfinie et/ou sans que l'accélération du véhicule ne tombe en dessous de la seconde limite inférieure d'accélération ; et

dans lequel l'accélération cible candidate respective ($cta_i$) pour le véhicule précédent correspondant ($V_i$) est déterminée en fonction du profil de secousse de confort ($j_{comfort}(t)$) et/ou du profil d'accélération de confort ($a_{comfort}(t)$).

**14.** Procédé selon les revendications 12 et 13, dans lequel ledit profil de secousse d'urgence ($j_{emergency}(t)$) et/ou ledit profil d'accélération d'urgence ($a_{emergency}(t)$) est déterminé si la distance de sécurité respective ($sd_i$) ne peut pas être atteinte en modifiant l'accélération du véhicule en fonction du schéma de modification d'accélération de confort et/ou si le véhicule ($V_o$) n'est pas dans un état de collision inévitable par rapport au véhicule précédent correspondant ($V_i$).

**15.** Procédé selon l'une quelconque des revendications 11 à 14, dans lequel la détermination de l'accélération cible candidate correspondante ($cta_i$) d'un véhicule précédent correspondant ($V_i$) comprend en outre, si la distance dé-

terminée correspondante ($d_i$) est égale ou supérieure à la distance de sécurité respective ($sd_i$), la détermination ($110_i$) si le véhicule ($V_o$) est dans un état de collision potentiel par rapport au véhicule précédent correspondant ($V_i$), dans lequel l'état de collision potentiel correspond à un état du véhicule ($V_o$) dans lequel si le véhicule précédent correspondant ($V_i$) initie une manoeuvre de freinage complète, une distance entre le véhicule ($V_o$) et le véhicule précédent correspondant ($V_i$) deviendra inférieure à la distance de sécurité respective ($sd_i$) dans un intervalle de temps prédéfini ($\Delta t$) à moins que l'accélération du véhicule ($V_o$) ne soit modifiée ; et

si le véhicule ($V_o$) est dans un état de collision potentiel par rapport au véhicule précédent correspondant ($V_i$), la détermination ($114_i$) de l'accélération cible candidate correspondante ($cta_i$) selon un schéma de modification d'accélération de commande de distance prédéterminé.

Fig. 1

Fig. 2

Fig. 3

Fig. 4

$V_1$

$L_1$

$V_0$      $Sd_1$

$V_3$

$L_2$

$Sd_2$

$L_3$

$V_2$

Fig. 5

$V_4$

$L_1$

$V_0$      $Sd_4$

$L_2$

$L_3$

Fig. 6

100i

Detect $V_i$  — 102i

Determine $d_i, v_i, sd_i$  — 104i

$d_i < ds_i$?  — 106i

Yes → ICS for $V_i$?  — 120i

No → comfort accel mod. scheme feasible?  — 124i

ICS for $V_i$? Yes → $cta_i = a_0^{min}$  — 122i

comfort accel mod. scheme feasible? Yes → Determine $j_{comfort}$  — 126i → $cta_i = a_0 + \int_{\tau}^{\tau+\Delta t} j_{comfort}(t)\,d\tau = \alpha_1$  — 128i

comfort accel mod. scheme feasible? No → Determine $j_{emergency}$  — 130i → $cta_i = a_0 + \int_{\tau}^{\tau+\Delta t} j_{emergency}(t)\,d\tau = \alpha_2$  — 132i

No → Exclusion condition? (+)  — 108i

Exclusion condition? (+) Yes → END

Exclusion condition? (+) No → $d_i < ds_i$ at $t = t_{now} + \Delta t$?  — 110i

$d_i < ds_i$ at $t = t_{now} + \Delta t$? No → $cta_i = a_0$  — 112i

$d_i < ds_i$ at $t = t_{now} + \Delta t$? Yes → $cta_i = a_0 + \int_{\tau}^{\tau+\Delta t} j_{brake}(t)\,d\tau$  — 114i

Fig. 7

a)

b)

Fig. 8

```
┌─────────────────┐ 202₁    ┌─────────────────┐ 202₂    ┌─────────────────┐ 202₃    ┌─────────────────┐ 202₄
│   100i for V₁   │         │   100i for V₂   │         │   100i for V₃   │         │   100i for V₄   │
└─────────────────┘         └─────────────────┘         └─────────────────┘         └─────────────────┘
         │                           │                           │                           │
         ▼                           ▼                           ▼                           ▼
┌─────────────────┐ 204₁    ┌─────────────────┐ 204₂    ┌─────────────────┐ 204₃    ┌─────────────────┐ 204₄
│   cta₁ (132₁)   │         │   cta₂ (128₂)   │         │        Ø        │         │   cta₄ (114₄)   │
└─────────────────┘         └─────────────────┘         └─────────────────┘         └─────────────────┘
```

$$\text{select } a_{target}=\min(cta_1, cta_2, cta_3, cta_4)$$

206

$$\text{control vehicle } V_0 \text{ for } a_0 \longrightarrow a_{target}$$

208

Fig. 9

EP 4 136 003 B1

## REFERENCES CITED IN THE DESCRIPTION

**Patent documents cited in the description**

- WO 2004005092 A1
- EP 3121076 A2

- US 20090299593 A1

**Non-patent literature cited in the description**

- Provably Safe Navigation for Mobile Robots with Limited Field-of-Views in Dynamic Environments. **S. BOURAINE ; T. FRAICHARD ; H. SALHI.** Autonomous Robots. Springer Verlag, 2012, vol. 32, 267-283